# EUROPEAN PATENT APPLICATION

(11) **EP 4 485 332 A1**
(43) Date of publication of application: **01.01.2025**
(21) Application number: 23780755.7
(22) Date of filing: 29.03.2023
(51) Int. Cl.: G06Q 30/0645

(54) **INFORMATION PROCESSING DEVICE, INFORMATION PROCESSING METHOD, AND PROGRAM**

(30) Priority: 31.03.2022 JP 2022059485
(71) Applicant: Realize Corporation, Inc., Tokyo 106-6134 (JP)
(72) Inventor: IMAFUKU Yosuke, Tokyo 106-6134 (JP)
(74) Representative: Ström & Gulliksson AB
(86) International application number: PCT/JP2023/012954
(87) International publication number: WO 2023/190747

(57) **Abstract**

The present invention addresses the problem of making it possible to, during transactions occurring between real space and virtual space, safely conduct transactions of values while maintaining trust between transactors. When a first transaction has been conducted, said transaction being for exchanging a first value and a second value between a first user who is present in real space or virtual space having a first value in real space or virtual space and a second user present in real space or virtual space having a second value in real space or virtual space, a transaction information management unit 58 records, as transaction information in a block chain B, information relating to the first value, information relating to the first user, information relating to the second value, and information relating to the second user, and manages the same. When a second transaction relating to at least some among the first value, the first user, the second value, and the second user is to be conducted, the transaction control unit 57 controls the second transaction by using the transaction information that has been recorded in the block chain B and managed. The aforementioned problem is solved thereby.

## Description

### TECHNICAL FIELD

The present invention relates to an information processing device, an information processing method, and a program.

### BACKGROUND ART

In recent years, times are changing from an era where people buy items to an era where people rent items. As a service for lending and renting items, there is a service called a Business to Consumer (BtoC) service, that is, a service where a company lends a rental item to an ordinary consumer. However, no such service where individuals lend and rent rental items to and from individuals has been achieved. Furthermore, there has already been provided conventionally a system for attaining matching between two individuals (see Patent Document 1) and various types of services for performing Consumer to Consumer (CtoC) electronic commerce trading (for example, Mercari and Yahoo! Auctions (or Yahoo-Auc in short, for example)). However, such systems and services are limited to sell and buy items. Note that Mercari and Yahoo! Auctions are registered trademarks.

### Citation List

### Patent Document

Patent Document 1: Japanese Unexamined Patent Application, Publication No. 2015-129983

### DISCLOSURE OF THE INVENTION

### Problems to be Solved by the Invention

However, conventional technologies include neither lending of rental items that are subject to CtoC electronic commerce trading nor transactions in those including virtual spaces.

In view of the situations described above, an object of the present invention is to make it possible to, during transactions occurring between a real space and a virtual space, safely conduct transactions of values while maintaining trust between transactors.

### Means for Solving the Problems

To achieve the object described above, an information processing device according to an aspect of the present invention includes:
a management unit that, when a first transaction for exchanging, between a first user who is present in a real space or a virtual space, the first user having a first value in the real space or the virtual space, and a second user who is present in the real space or a virtual space, the second user having a second value in the real space or the virtual space, the first value and the second value has been conducted, records and manages, in a block chain or a distributed ledger, as transaction information, information relating to the first value, information relating to the first user, information relating to the second value, and
information relating to the second user; and
a transaction control unit that, when a second transaction relating to at least one of the first value, the first user,
the second value, or the second user is to be conducted,
controls the second transaction by using the transaction information recorded and managed in the block chain or the distributed ledger by the management unit.

An information processing method and a program according to the aspect of the present invention are, respectively, an information processing method and a program corresponding to the information processing device according to the aspect of the present invention described above.

### Effects of the Invention

According to the present invention, it is possible to, during transactions occurring between the real space and a virtual space, safely conduct transactions of values while maintaining trust between transactors.

### BRIEF DESCRIPTION OF THE DRAWINGS

FIG. 1 is a view illustrating an outline configuration of an information processing system including a management server according to an embodiment of an information processing device of the present invention;
FIG. 2 is a view illustrating an example of a configuration of the information processing system to which a present service illustrated in FIG. 1 is applied, that is, the information processing system to which the management server according to the embodiment of the information processing device of the present invention is applied;
FIG. 3 is a block diagram illustrating a hardware configuration of the management server illustrated in FIG. 1; FIG. 4 is a functional block diagram illustrating an example of a functional configuration of the management server illustrated in FIG. 3;
FIG. 5 is a view illustrating a specific example of a transaction that becomes feasible in the present service illustrated in FIG. 1, which is provided by the management server having the functional configuration illustrated in FIG. 4;
FIG. 6 is a view illustrating a specific example of a transaction that becomes feasible in the present service illustrated in FIG. 1, which is provided by the management server having the functional configuration illustrated in FIG. 4, and an example that is different from that illustrated in FIG. 5;
FIG. 7 is a view illustrating a specific example of transactions that become feasible in the present service illustrated in FIG. 1, which is provided by the management server having the functional configuration illustrated in FIG. 4, and an example that is different from those illustrated in FIGs. 5 and 6;
FIG. 8 is a view illustrating an outline of a fund that becomes feasible through application of the information processing system according to the embodiment of the present invention;
FIG. 9 is a view illustrating an outline configuration of an information processing system applied to a truck fund illustrated in FIG. 8, that is, the information processing system according to the embodiment of the present invention; FIG. 10 is an image view illustrating a basic flow of a rental service that becomes feasible through application of the information processing system according to the embodiment of the present invention;
FIG. 11 is an image view illustrating a flow of a fee paid from a renting user in the rental service;
FIG. 12 is a view illustrating an example case of making a rental application via a graphical user interface (GUI) displayed on each of lender terminals 2 and renter terminals 2;
FIG. 13 is a view illustrating a specific example of a first stage of a first transaction relating to investments that become feasible in the present service illustrated in FIG. 1, which is provided by the management server having the functional configuration illustrated in FIG. 4;
FIG. 14 is a view illustrating a specific example of a second stage of the first transaction relating to the investments that become feasible in the present service illustrated in FIG. 1, which is provided by the management server having the functional configuration illustrated in FIG. 4;
FIG. 15 is a view illustrating a specific example a third stage of the first transaction relating to the investments that become feasible in the present service illustrated in FIG. 1, which is provided by the management server having the functional configuration illustrated in FIG. 4;
FIG. 16 is a view illustrating a specific example of a fourth stage of the first transaction relating to the investments that become feasible in the present service illustrated in FIG. 1, which is provided by the management server having the functional configuration illustrated in FIG. 4;

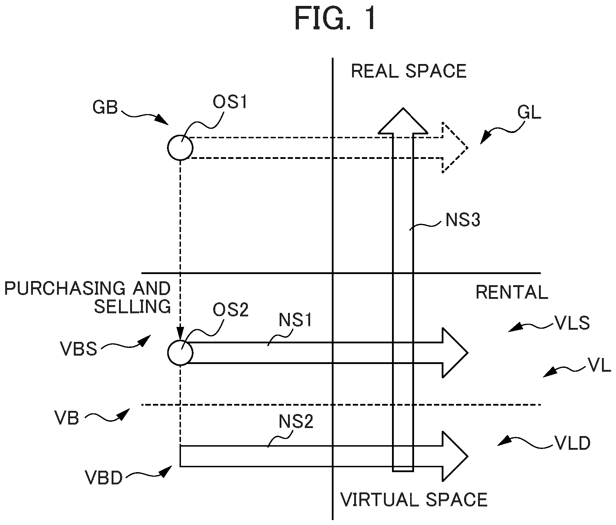

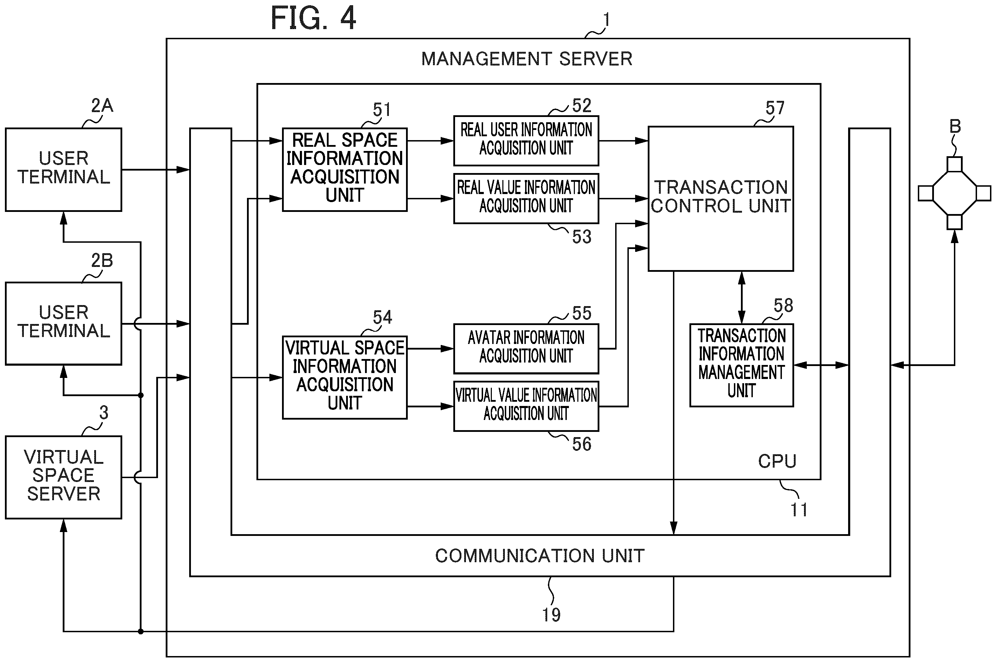

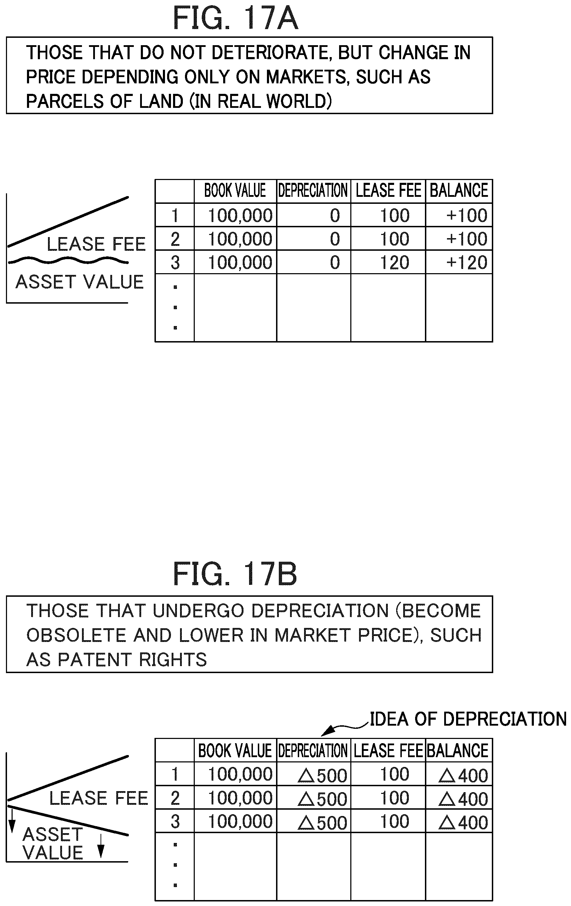

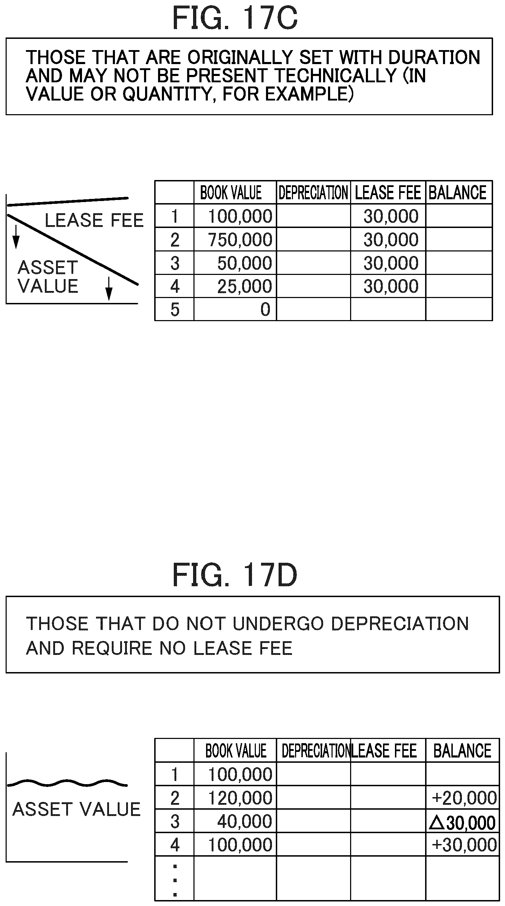

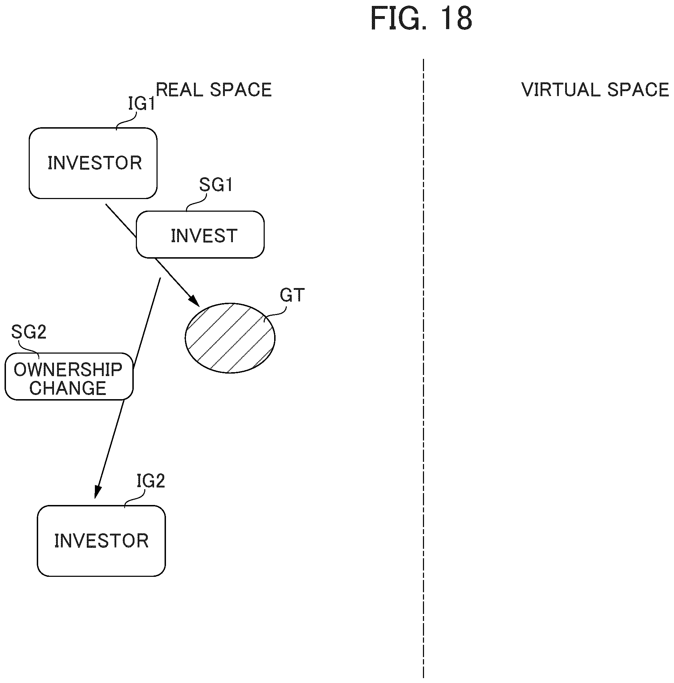

FIG. 17A is a view illustrating a specific example of handling of assets in virtual investment targets in a virtual space; FIG. 17B is a view illustrating a specific example of handling of assets in virtual investment targets in a virtual space; FIG. 17C is a view illustrating a specific example of handling of assets in virtual investment targets in a virtual space; FIG. 17D is a view illustrating a specific example of handling of assets in virtual investment targets in a virtual space; FIG. 18 is a view illustrating a specific example of a first stage of a second transaction relating to investments that become feasible in the present service illustrated in FIG. 1, which is provided by the management server having the functional configuration illustrated in FIG. 4;
FIG. 19 is a view illustrating a specific example of a second stage of the second transaction relating to the investments that become feasible in the present service illustrated in FIG. 1, which is provided by the management server having the functional configuration illustrated in FIG. 4;
FIG. 20 is a view illustrating a specific example of a third stage of the second transaction relating to the investments that become feasible in the present service illustrated in FIG. 1, which is provided by the management server having the functional configuration illustrated in FIG. 4;
FIG. 21 is a view illustrating a specific example of a fourth stage of the second transaction relating to the investments that become feasible in the present service illustrated in FIG. 1, which is provided by the management server having the functional configuration illustrated in FIG. 4;
FIG. 22 is a view illustrating cases of investments that become feasible in the present service illustrated in FIG. 1, which is provided by the management server having the functional configuration illustrated in FIG. 4;
FIG. 23 is a view illustrating a specific example of a first pattern relating to investments of a fund, which become feasible in the present service illustrated in FIG. 1, which is provided by the management server having the functional configuration illustrated in FIG. 4;
FIG. 24 is a view illustrating a specific example of a second pattern relating to the investments of the fund, which become feasible in the present service illustrated in FIG. 1, which is provided by the management server having the functional configuration illustrated in FIG. 4;
FIG. 25 is a view illustrating a specific example of a third pattern relating to the investments of a fund, which become feasible in the present service illustrated in FIG. 1, which is provided by the management server having the functional configuration illustrated in FIG. 4; and
FIG. 26 is a view illustrating a specific example of a first pattern relating to the investments of a fund, which become feasible in the present service illustrated in FIG. 1, which is provided by the management server having the functional configuration illustrated in FIG. 4.

### PREFERRED MODE FOR CARRYING OUT THE INVENTION

An embodiment of the present invention will now be described herein with reference to the accompanying drawings.

An outline of a service (hereinafter referred to as the "present service") that becomes feasible by an information processing system to which a management server according to an embodiment of the present invention is applied will now first be described herein with reference to FIG. 1. FIG. 1 is a view illustrating the outline of the present service that becomes feasible by the information processing system to which the management server according to the embodiment of the information processing device of the present invention is applied.

Around an origin, as illustrated in FIG. 1, an upper part in FIG. 1 illustrates a real space (a real world), and a lower part illustrated in FIG. 1 illustrates a virtual space. It means that, the more proximal to the origin, the higher the relevancy between the real space (the real world) and the virtual space, and the more distal to the origin, the deeper the world specific to the real space (the real world) or the virtual space. Furthermore, around the origin, a left part in FIG. 1 illustrates an area where transactions relating to purchasing and selling take place, and a right part illustrates an area where transactions relating to rental (leasing) take place.

A region GL of a first quadrant is a region where there are acts of rental in the real world, and a region where currencies distributed in the real world are used. The region GL of the first quadrant as described above will be hereinafter referred to as a "real world rental region GL". A region GB of a second quadrant is a region where there are acts of selling in the real world, and a region where currencies distributed in the real world are used. The region GB of the first quadrant as described above will be hereinafter referred to as a "real world purchasing and selling region GB". A region VB of a third quadrant is a region where there are acts of selling in the virtual space, and is a region where virtual currencies (crypto-assets) distributed in the virtual space are used. The region VB of the first quadrant as described above will be hereinafter referred to as a "virtual space purchasing and selling region VB". Note herein that, a shallower region VBS (that is proximal to the origin) in the virtual space purchasing and selling region VB is a region where a target of purchasing and selling is a virtual currency. On the other hand, a deeper region VBD (that is distal to the origin) in the virtual space purchasing and selling region VB is a region where a target of purchasing and selling is an object (an item or a parcel of land on a virtual space) disposed in a metaverse (a virtual space). A region VL of a fourth quadrant is a region where there are acts of rental in the virtual space, and a region where virtual currencies distributed in the virtual space are used. The region VL of the fourth quadrant as described above will be hereinafter referred to as a "virtual space rental region VL". Note herein that, a shallower region VLS (that is proximal to the origin) in the virtual space rental region VL is a region where a rental target is a virtual currency (a crypto-currency). On the other hand, a deeper region VLD (that is distal to the origin) in the virtual space rental region VL is a region where a target of rental is an object (an item or a parcel of land on a virtual space) disposed in a metaverse (a virtual space).

As a service OS1 available in the real world purchasing and selling region GB, a purchasing and selling service for items using CtoC electronic commerce trading has been conventionally present, such as Mercari (registered trademark) or Yahoo! Auctions (registered trademark). In addition to the conventional service OS1 as described above, the present applicants have already proposed a rental service for items using CtoC electronic commerce trading, as illustrated by a dotted-line arrow heading toward the real world rental region GL (see Japanese Patent Application No. 2021-063369 and Japanese Patent No. 7092949, for example).

Furthermore, as a service OS2 available in the region VBS in the virtual space purchasing and selling region VB, a purchasing and selling service for a virtual currency such as Bitcoin (registered trademark) has been conventionally present.

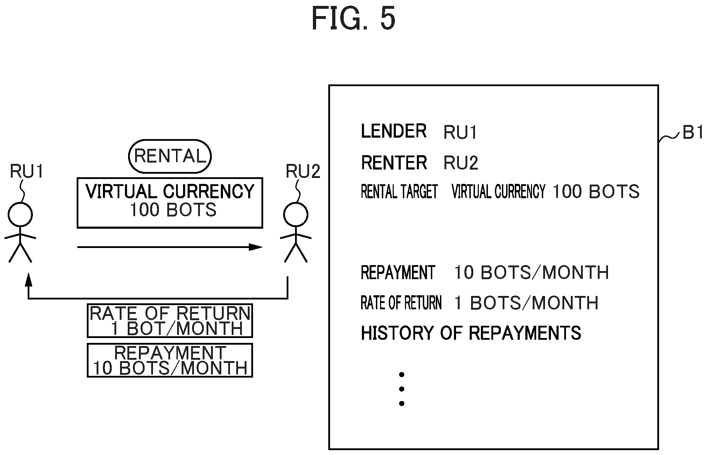

As an example of the present service, as illustrated by an arrow heading toward the shallower region VLS in the virtual space rental region VL from the conventional service OS2, for example, it is possible to provide a service NS1 for so-called lending of money including a virtual currency such as Bitcoin (registered trademark). Note that a specific example of the service NS1 for lending of money including a virtual currency will be described later with reference to FIG. 5.

Furthermore, as an example of the present service, as illustrated by an arrow heading toward the deeper region VLD in the virtual space rental region VL from the deeper region VBD in the virtual space purchasing and selling region VB, for example, it is possible to provide a service NS2 for allowing an object (an item or a parcel of land on a virtual space) to be purchased, sold, or rented in a metaverse (a virtual space), for example.

Furthermore, when an item in the real world, a currency or gold in the real world, an object in a virtual space, or a virtual currency in a virtual space is grasped as a "value", for example, it is possible to provide, as an example of the present service, such a service NS3 as described below, as illustrated by an arrow heading toward the real world rental region GL from the virtual space rental region VL, for example. That is, it is possible to provide, as the service NS3, a service for supporting a transaction for exchanging, between a first user who is present in the real space or a virtual space, the first user having a first value in the real space or the virtual space, and a second user who is present in the real space or a virtual space, the second user having a second value in the real space or the virtual space, the first value and the second value, that is, the transaction when at least one of the first value, the first user, the second value, or the second user is present in the virtual space. Note that the arrow indicating the service NS3 in FIG. 1 is a mere example provided for easy understanding from the above description of the service NS3. That is, it is possible to indicate the service NS3 as not only the arrow illustrated in FIG. 1, but also various types and forms of directional arrows that are not illustrated in FIG. 1.

The present service representing the services NS1 to NS3 further secures safe transactions. Specifically, when a transaction of exchanging a first value and a second value between a first user and a second user has been conducted, the present service records and manages, in a block chain or a distributed ledger, as transaction information, information relating to the first value, information relating to the first user, information relating to the second value, and information relating to the second user. Note that it is assumed that a block chain is used in examples described below.

In an environment where a plurality of computers forming a distributed network are combined with an encryption technology, the block chain causes pieces of data such as transaction information to be synchronized with each other and records the synchronized pieces of data. In a case of the block chain, pieces of transaction information acquired in a certain period of time are gathered with each other in a unit of block, the computers together evaluate the pieces of transaction information, and correct records are coupled to each other to form a chain, for example, and are accumulated. Characteristics of the block chain make it possible to select, even if a piece of transaction data is falsified in one of the computers, a correct piece of transaction data by majority of the other ones of the computers, preventing records from being falsified, and preventing unauthorized transactions from being performed. In the block chain, units of data called blocks are generated, and the units are coupled to each other in a chronological order to form a chain, for example, to serve as a database. Each block has a hash value (a value calculated using a hash function) of a previous block coupled to the block. By tracing back the hash values, it is possible to know how the blocks are coupled to each other. When there has been an attempt of falsifying a piece of information in a block generated in the past, which is managed in the block chain, a hash value calculated from the block in which there is a change differs from the hash value of the previous block, resulting in that hash values in all the subsequent blocks needing to be changed. However, it is difficult to change hash values in all the subsequent blocks in fact and therefore, measures are in place to prevent falsification.

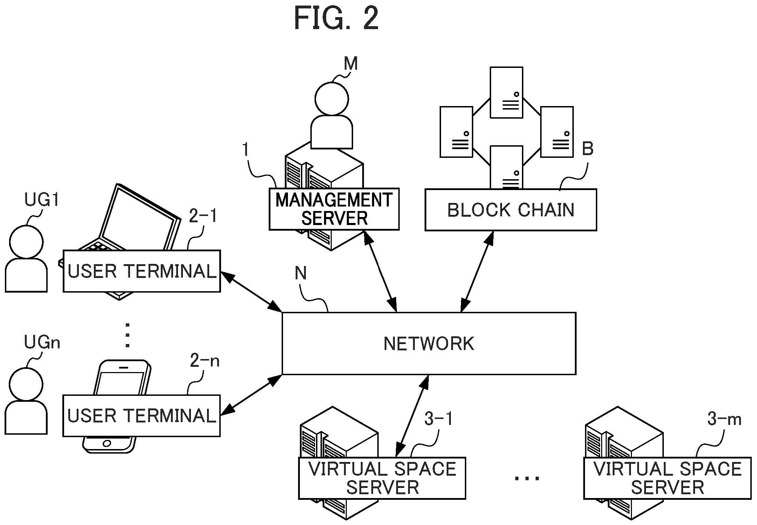

Next, a configuration of the information processing system achieving provision of the present service described above, that is, the information processing system to which the management server according to the embodiment of the information processing device of the present invention is applied will now be described herein with reference to FIG. 2. FIG. 2 is a view illustrating an example of the configuration of the information processing system to which the present service illustrated in FIG. 1 is applied, that is, the information processing system to which the management server according to the embodiment of the information processing device of the present invention is applied.

The information processing system illustrated in FIG. 2 includes a management server 1, user terminals 2-1 to 2-n (n is a desired integer value equal to or more than 1), virtual space servers 3-1 to 3-m (m is a desired integer value equal to or more than 1), and a block chain B, all of which are communicably coupled to each other via a predetermined network N such as the Internet.

The management server 1 is an information processing device managed by a person M providing the present service illustrated in FIG. 1 (hereinafter referred to as a "service provider M"). The management server 1 transmits and receives various types of information to and from each of the user terminals 2-1 to 2-n, the virtual space servers 3-1 to 3-m, and the block chain B to execute various types of processing for providing the present service.

The user terminals 2-1 to 2-n are information processing devices, such as personal computers, smart phones, and tablets, respectively operated by users UG1 to UGn (hereinafter referred to as "real users UG1 to UGn") who are present in the real world. Note that the real users UG1 to UGn will be hereinafter collectively referred to as the "real users UG", unless otherwise specifically distinguished from each other. Furthermore, when the real users are referred to as the real users UG, the user terminals 2-1 to 2-n will be hereinafter collectively referred to as the "user terminals 2" .

The virtual space servers 3-1 to 3-m are information processing devices for respectively constructing virtual spaces to provide predetermined services, for example. Note herein that a virtual space managed by a virtual space server 3-p (p is any one of integer values ranging from 1 to m) and a virtual space managed by a virtual space server 3-q (q is any one of integer values ranging from 1 to m excluding p) may be different from each other or may be identical to each other. Note that the virtual space servers 3-1 to 3-m will be hereinafter collectively referred to as the "virtual space servers 3", unless otherwise specifically distinguished from each other.

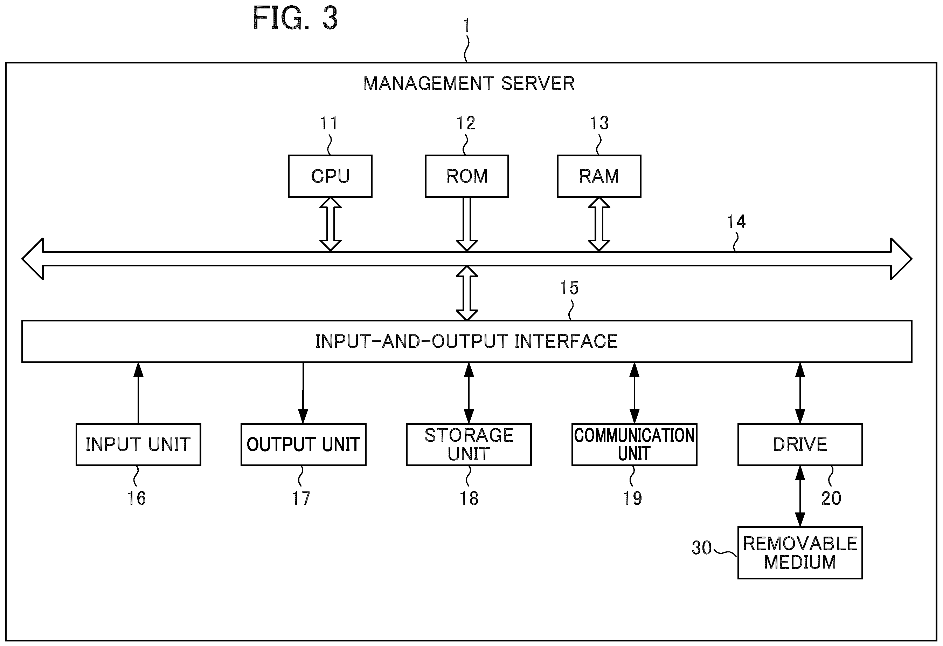

Next, a hardware configuration of the management server 1 that executes various types of processing to provide the present service will now be described herein. FIG. 3 is a block diagram illustrating the hardware configuration of the management server illustrated in FIG. 2.

The management server 1 includes a central processing unit (CPU) 11, a read only memory (ROM) 12, a random access memory (RAM) 13, a bus 14, an input-and-output interface 15, an input unit 16, an output unit 17, a storage unit 18, a communication unit 19, and a drive 20.

The CPU 11 executes various types of processing in accordance with programs recorded in the ROM 12 or programs loaded from the storage unit 18 to the R_AM 13. The R_AM 13 appropriately stores, for example, data necessary for the CPU 11 when executing various types of processing.

The CPU 11, the ROM 12, and the RAM 13 are coupled to each other via the bus 14. The bus 14 is further coupled to the input-and-output interface 15. The input-and-output interface 15 is coupled to the input unit 16, the output unit 17, the storage unit 18, the communication unit 19, and the drive 20.

The input unit 16 is formed of hardware of any type, for example, to accept various types of information. The output unit 17 includes a display of any type and a speaker of any type to output various types of information in forms of image and audio, for example. The storage unit 18 is formed of a dynamic random access memory (DRAM), for example, to store various types of data. The communication unit 19 controls communications that take place among other devices (for example, the user terminals 2-1 to 2-n and the virtual space servers 3-1 to 3-m illustrated in FIG. 1) and the block chain B via the network N including the Internet.

The drive 20 is provided as required. The drive 20 is appropriately attached with a removable medium 30 such as a magnetic disk, an optical disk, a magnetic optical disk, or a semiconductor memory. A program read from the removable medium 30 by the drive 20 is installed into the storage unit 18 as required. Furthermore, the removable medium 30 is able to store various types of data stored in the storage unit 18, similar to the storage unit 18.

Next, a functional configuration of the management server 1 will now be described herein with reference to FIG. 4. FIG. 4 is a functional block diagram illustrating an example of the functional configuration of the management server illustrated in FIG. 3.

In the CPU 11 in the management server 1, as illustrated in FIG. 4, a real space information acquisition unit 51, a real user information acquisition unit 52, a real value information acquisition unit 53, a virtual space information acquisition unit 54, an avatar information acquisition unit 55, a virtual value information acquisition unit 56, a transaction control unit 57, and a transaction information management unit 58 function.

The real space information acquisition unit 51 acquires, when, in a transaction for exchanging values, at least one of targets for exchanging the values and transactors are those present in the real space, information relating to the real space (hereinafter referred to as "real space information") from the user terminals 2 (in the example illustrated in FIG. 4, the user terminals 2A and 2B) of the real users UG each performing an operation for the transaction. Note herein that, as real space information necessary for exchanging values, information relating to the real users UG (hereinafter referred to as "real user information") and information relating to values in the real space (for example, commodities and services for purchasing and selling and rental targets and currencies in the real space) (hereinafter referred to as "real value information") are present. The real user information acquisition unit 52 acquires the real user information in the real space information, and provides the acquired real user information to the transaction control unit 57. The real value information acquisition unit 53 acquires the real value information in the real space information, and provides the acquired real value information to the transaction control unit 57.

The virtual space information acquisition unit 54 acquires, when, in a transaction of exchanging values, at least one of targets for exchanging the values and transactors are those present in a virtual space, information relating to the virtual space (hereinafter referred to as "virtual space information") from a virtual space server managing the virtual space. Note herein that, as virtual space information necessary for exchanging values, information relating to users who each take a role as a transactor and are present as avatars in the virtual space (hereinafter referred to as "avatar information") and information relating to values in the virtual space (for example, objects that are present in the virtual space for purchasing and selling and rental targets and virtual currencies) (hereinafter referred to as "virtual value information") are present. The avatar information acquisition unit 55 acquires the avatar information in the virtual space information, and provides the acquired avatar information to the transaction control unit 57. The virtual value information acquisition unit 56 acquires the virtual value information in the virtual space information, and provides the acquired virtual value information to the transaction control unit 57.

The transaction control unit 57 executes various types of control processing relating to a first transaction for exchanging, between a first user who is present in the real space or a virtual space, the first user having a first value in the real space or the virtual space, and a second user who is present in the real space or a virtual space, the second user having a second value in the real space or the virtual space, the first value and the second value, that is, the first transaction when at least one of the first value, the first user, the second value, or the second user is present in the virtual space. Note that various types of specific examples of a first value, a first user, a second value, and a second user will be described later with reference to FIG. 5 and onward drawings.

The transaction information management unit 58 records and manages, in the block chain B, as transaction information, when a first transaction has been conducted as a result of control by the transaction control unit 57, information relating to the first value, information relating to the first user, information relating to the second value, and information relating to the second user.

When a second transaction relating to at least one of the first value, the first user, the second value, or the second user is to be conducted in a state where, as the first transaction has ended as described above, the transaction information relating to the first transaction has been recorded in the block chain B, the transaction control unit 57 uses the transaction information relating to the first transaction, which has been recorded and managed in the block chain B, to execute various types of control processing relating to the second transaction.

Next, specific examples of transactions that become feasible in the present service illustrated in FIG. 1, which is provided by the management server 1 having the functional configuration illustrated in FIG. 4, will now be described herein with reference to FIGs. 5 to 7.

FIG. 5 is a view illustrating a specific example of a transaction that becomes feasible in the present service illustrated in FIG. 1, which is provided by the management server having the functional configuration illustrated in FIG. 4. In the example illustrated in FIG. 5, it is assumed that a first user RU1 who is present in the real space or a virtual space have a virtual currency of 100 bots (the term "bot" is assumed to represent a unit of a crypto-currency) as a first value, and rent the virtual currency of 100 bots to a second user RU2 who is present in the real space or a virtual space under a condition where a monthly repayment amount is 10 bots and a monthly rate of return is 1 bot. In other words, a second value for the second user RU2 includes the monthly repayment amount and the monthly rate of return in the virtual currency. Note herein that the first user RU1 or the second user RU2 is regarded as a real user UG when the first user RU1 or the second user RU2 is present in the real space or as a virtual user represented as an avatar when the first user RU1 or the second user RU2 is present in a virtual space.

In this case, transaction information B1 as illustrated in FIG. 5 is generated, recorded, and managed in the block chain B. That is, information in which "Rental target: Virtual currency of 100 bots" is described as information relating to the first value, "Lender: First user RU1" is described as information relating to the first user, "Repayment: 10 bots/month" and "Rate of return: 1 bot/month" are described as information relating to the second value, and "Renter: Second user RU2" is described as information relating to the second user, respectively, and "History of repayments" is described as records of distribution of the second value is generated as the transaction information B1, and recorded and managed in the block chain B.

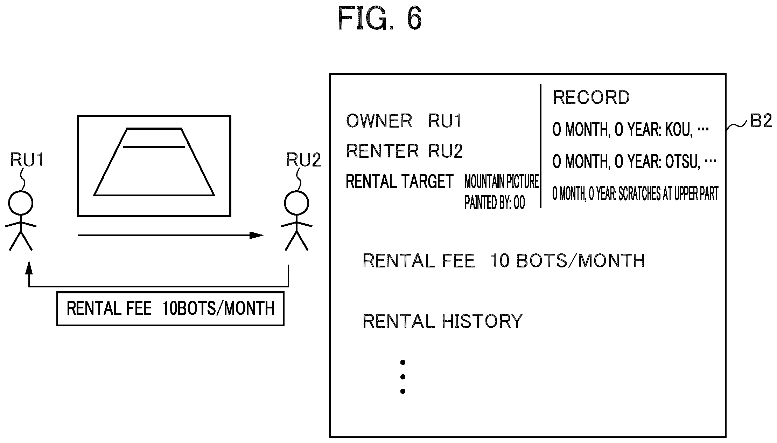

FIG. 6 is a view illustrating a specific example of a transaction that becomes feasible in the present service illustrated in FIG. 1, which is provided by the management server having the functional configuration illustrated in FIG. 4, and an example that is different from that illustrated in FIG. 5. In the example illustrated in FIG. 6, it is assumed that a first user RU1 who is present in the real space or a virtual space has, as a first value, a "mountain picture" that is present in a virtual space or the real space, and rents the "mountain picture" to a second user RU2 who is present in the real space or a virtual space under a condition where a monthly rental fee is 10 bots. In other words, a second value for the second user RU2 includes the monthly rental fee in the virtual currency. Note herein that the first user RU1 or the second user RU2 is regarded as a real user UG when the first user RU1 or the second user RU2 is present in the real space or as a virtual user represented as an avatar when the first user RU1 or the second user RU2 is present in a virtual space.

In this case, transaction information B2 as illustrated in FIG. 6 is generated, recorded, and managed in the block chain B. That is, information in which "Rental target: Mountain picture" is described as information relating to the first value, "Lender: First user RU1" is described as information relating to the first user, "Rental fee: 10 bots/month" is described as information relating to the second value, and "Renter: Second user RU2" is described as information relating to the second user, respectively, and "Rental history" is described as records of owners and distribution of the first value and records of distribution of the second value is generated as the transaction information B2, and recorded and managed in the block chain B.

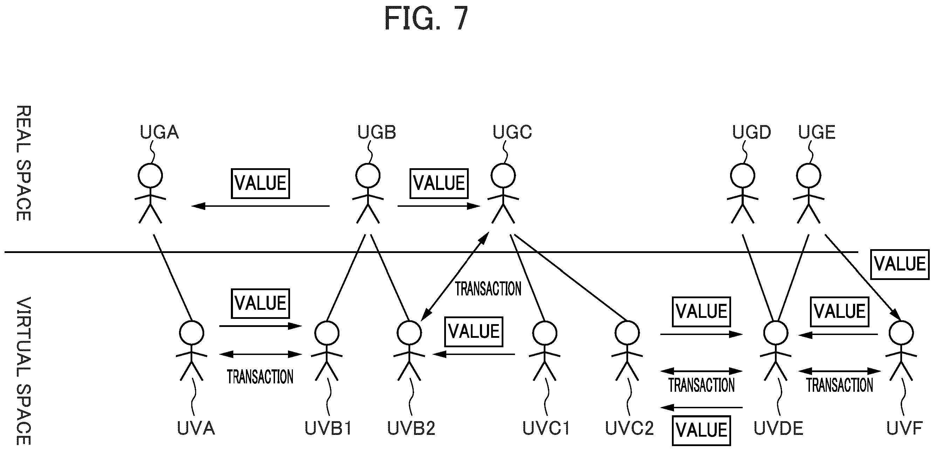

FIG. 7 is a view illustrating a specific example of transactions that become feasible in the present service illustrated in FIG. 1, which is provided by the management server having the functional configuration illustrated in FIG. 4, and an example that is different from those illustrated in FIGs. 5 and 6. In the example illustrated in FIG. 7, an N (N is an integer value equal to or more than 0) number of real users UG and an M (M is an integer value equal to or more than 0) number of virtual users UV represented as avatars are associated with each other. Note herein that a state where a real user UG and a virtual user UV are associated with each other means that the real user UG behaves as a real user UG in the real space, but behaves as a virtual user UV in a virtual space by operating the user terminal 2. Furthermore, when N = 0, such a case means that a user behaves as a virtual user UV in a virtual space in an autonomous manner through artificial intelligence (AI), for example. Specifically, in the example illustrated in FIG. 7, for example, one real user UGA and one virtual user UVA are associated with each other. One real user UGB and two virtual users UVB1, UVB2 are associated with each other. One real user UGC and two virtual users UVC1, UVC2 are associated with each other. Two real users UGD, UGE and one virtual user UVDE are associated with each other. A virtual user UVF is associated with no real user UG, and acts in an autonomous manner through AU, for example.

In a left-most example illustrated in FIG. 7, a transaction for exchanging, between the virtual user UVA having a first value in a virtual space and the virtual user UVB1 having a second value in the real space, the first value and the second value is conducted. In this case, information including at least information relating to the first value, information relating to the virtual user UVA and the real user UGA, information relating to the second value, and information relating to the virtual user UVB1 and the real user UGB is generated as transaction information, and recorded, and managed in the block chain B.

In a second left-most example illustrated in FIG. 7, a transaction for exchanging, between the virtual user UVB2 having a first value in the real space and the real user UGC having a second value in a virtual space, the first value and the second value is conducted. In this case, information including at least information relating to the first value, information relating to the virtual user UVB2 and the real user UGB, information relating to the second value, and information relating to the real user UGC and the virtual user UVC1 is generated as transaction information, and recorded, and managed in the block chain B.

In a third left-most example illustrated in FIG. 7, a transaction for exchanging, between the virtual user UVC2 having a first value in a virtual space and the virtual user UVDE having a second value in a virtual space, the first value and the second value is conducted. In this case, information including at least information relating to the first value, information relating to the virtual user UVC2 and the real user UGC, information relating to the second value, and information relating to the virtual user UVDE and the real users UGD, UGE is generated as transaction information, and recorded, and managed in the block chain B.

In a fourth left-most example illustrated in FIG. 7, that is, in a right-most example illustrated in FIG. 7, a transaction for exchanging, between the virtual user UVDE having a first value in the real space and the virtual user UVF having a second value in a virtual space, the first value and the second value is conducted. In this case, information including at least information relating to the first value (including information that the real users UGD, UGE are each in possession of the first value in the real space), information relating to the virtual user UVDE and the real users UGD, UGE, information relating to the second value, and information relating to the virtual user UVF (including information that it is achieved through AI, for example, and there is no association with the real users UG) is generated as transaction information, and recorded, and managed in the block chain B.

Note herein that it is possible to regard at least either a first value or a second value as a value relating to an investment of those including a fund. As specific examples as described above, description will be given below using a truck fund that has already been proposed by the present applicants (see Japanese Patent No. 7152061) and the rental service described above (see Japanese Patent Application No. 2021-063369 and Japanese Patent No. 7092949, for example).

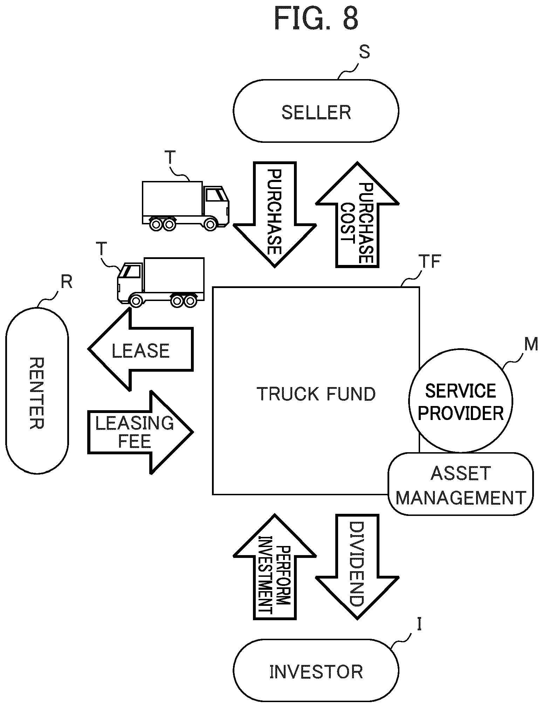

FIG. 8 is a view illustrating an outline of a fund that becomes feasible through application of the information processing system according to the embodiment of the present invention. In a fund TF according to the present embodiment, trucks T serve as investment targets, a service provider M performs asset management, and a financial resource for a dividend (a profit) to an investor I is leasing fees (so-called lease fees) of the trucks T. Note that the fund TF according to the present embodiment where the trucks T serve as the targets as described above will be hereinafter referred to as a "truck fund F". Note herein that it is possible to configure the truck fund F in each of the real space (the real world) and a virtual space. Furthermore, an investment target for the truck fund F may be a truck T that is a material body in the real space or a truck T that is present as an object in a metaverse (a virtual space).

As those involving the truck fund TF, as illustrated in FIG. 8, the service provider M, the investor I, a seller S, and a renter R are present.

Note herein that the service provider M is a person providing a service for selling the truck fund TF as a commodity to the investor I, and, in the present embodiment, performs asset management and also takes a role as a fund manager. A fund manager refers to an individual or organization aiming, as an administration body of the truck fund TF, to use and increase assets consigned from the investor I. Note that an "individual or organization" as referred to herein may be an "individual or organization" in the real space (the real world) or an "individual or organization" in a virtual space. One assumed individual in a virtual space is a virtual user represented as an avatar.

The investor I is an individual or corporate body investing current assets to the truck fund TF for mainly aiming to increase the assets in the future, including, for example, individual investors and institutional investors. Note that an "individual or organization" as referred to herein may be an "individual or organization" in the real space (the real world) or an "individual or organization" in a virtual space. One assumed individual in a virtual space is a virtual user represented as an avatar.

The seller S is a person selling a truck T and earning a consideration based on a purchases-and-sales contract with the truck fund TF (or the service provider M performing asset management). Note herein that a truck T may not necessarily be a new one (for which no previous owner has been present), but may be a used one. Furthermore, as described above, a truck T that is present in a virtual space is configured to be represented as an object in the virtual space. Furthermore, a financial resource (a purchase cost) with which the truck fund TF (or the service provider M performing asset management) purchases a truck T from the seller S is an asset invested by the investor I (the asset is mainly regarded as a first value).

The renter R is a person renting one or more trucks T that are subject to the truck fund TF based on a rent-and-lease contract with the service provider M of the truck fund TF (or the service provider M performing asset management). Note that an "individual or organization" as referred to herein may be an "individual or organization" in the real space (the real world) or an "individual or organization" in a virtual space. One assumed individual in a virtual space is a virtual user represented as an avatar. The renter R pays a leasing fee for a truck T at once or per predetermined unit period of time (for example, per month) to the truck fund TF (or the service provider M performing asset management). As described above, this leasing fee is used as a financial resource for a dividend (serving as a profit and mainly serving as a second value) for the investor I.

That is, in the present embodiment, a cost for purchasing investment targets, that is, a t (t is an integer value equal to or more than 1) number of trucks T is based on the investment that is performed by the investor I. Note herein that, in the t number of trucks T, trucks T that are present in the real space (the real world) and trucks T that are present in a virtual space may be mixed. The truck fund TF (or the service provider M performing asset management) purchases the t number of trucks T from and concludes a purchases-and-sales contract with the seller S. Note that conclusion content of the purchases-and-sales contract is recorded and managed in the block chain B as a part of transaction information. Thereby, the truck fund TF takes a role as an owner of the t number of trucks T. Then, the service provider M concludes a rent-and-lease contract and an asset management contract with the truck fund TF. Note that conclusion content of the rent-and-lease contract and the asset management contract is recorded and managed in the block chain B as a part of the transaction information. Note herein that the asset management contract refers to a contract stipulating that the service provider M manages the trucks T, on behalf of the fund representing the owner of the trucks T. Based on the asset management contract, a management fee is paid from the truck fund TF to the service provider M. Note that such a record that the management fee has been paid is also recorded and managed in the block chain B as a part of the transaction information. In the present embodiment, the service provider M rents the t number of trucks T from the fund, and, furthermore, concludes a rent-and-lease contract with the lender to lease the t number of trucks T to the renter R. Note that conclusion content of the rent-and-lease contract with the lender is recorded and managed in the block chain B as a part of the transaction information. A first leasing fee (a so-called lease fee) for the t number of trucks T from the lender R to the service provider M is paid from the lender R to the service provider M. A second leasing fee for the t number of trucks T from the service provider M to the truck fund TF is paid from the service provider M to the truck fund TF. Note herein that, when the first leasing fee is higher than the second leasing fee, the service provider M is able to earn a profit. Furthermore, a leasing fee for the truck fund TF in computing (including simulation) for establishing the truck fund TF as a commodity means the second leasing fee. Note that such a record that the first leasing fee and the second leasing fee have been paid is also recorded and managed in the block chain B as a part of the transaction information. Furthermore, each of the trucks T, for which predetermined years stipulated in advance in the truck fund TF have passed, may be sold by the truck fund TF. A buyer buying the truck is not particularly limited, and may be the service provider M or another non-illustrated party. Such a sales price for a truck T is also recorded and managed in the block chain B as a part of the transaction information. Thereby, the truck fund TF is able to earn a profit from the second leasing fee based on the rent-and-lease contract with the service provider M for the t number of trucks T and the sales price based on the selling of the t number of trucks T after predetermined years have passed. A record of the profit is also recorded and managed in the block chain B as a part of the transaction information. The truck fund TF is able to use this profit as a source to stably provide a dividend to the investor I. Note that such a record that the dividend (mainly serving as a second value) is provided to the investor I is also recorded and managed in the block chain B as a part of the transaction information. Note that the service provider M is able to earn a profit based on the second leasing fee (> the first leasing fee) based on the lease-and-rent contract with the renter R. This profit is also recorded and managed in the block chain B as a part of the transaction information.

Note herein that, although, as a truck T that is subject to the truck fund TF, a new one in the real space (the real world) (for which no owner has been present previously) may be employed, it is preferable to employ a used one in the real space (the real world). Some reasons for this are as described below. First of all, as a prerequisite knowledge, it is not allowed, in accounting processing when a truck T that is present in the real space (the real world) is purchased regardless of whether the truck T is a new one or a used one, on tax businesses in at least Japan, to immediately record a total amount of money required for acquiring the truck T as a cost. One reason for this is that it is considered that a truck T that is present in the real space (the real world) be used for some years, and, it is necessary to record its cost as depreciation costs in accordance with a period of time of use of the truck T. Note that the period of time of use is also referred to as "durable years". For an amount of money that the investor has invested in the purchase cost for the truck T that is present in the real space (the real world), which is subject to the truck fund TF, in this case, the investor I is able to record in its accounting, as a cost, the depreciation costs during the period of time until the durable years have passed. That is, the investor I purchasing a commodity available from the truck fund TF is able to have a tax-related benefit. Note that, each time a depreciation cost is recorded, the depreciation cost is recorded and managed in the block chain B as a part of the transaction information. Such a tax-related benefit on depreciation is greater for used ones than that for new ones. One reason for this is that it is ordinarily considered not to be possible to use a used one for a longer period of time than a new one, and that the number of durable years for a used one is less than that for a new one. That is, there is such a benefit that it is possible to record a cost (based on depreciation) within a shorter period of time for a used one than that for a new one in accounting processing. Therefore, it can be said that a used one is an investment target that is superior in rate of return on investment for the investor I, and that offers stability in demand-and-supply balance and transaction market.

Note herein that, although, when a truck T that is subject to the truck fund TF appears as an object in a virtual space (a metaverse), the truck may be treated in a different manner depending on a rule applied in the metaverse and laws and ordinances to be applied in the future, for example, it is possible, within a range that the rule, the laws and ordinances, and other constraints allow, to set durable years resembling those in the real space (the real world) to set a depreciation cost and to employ other styles. Details for those described above will be described later with reference to FIGs. 17A to 17D.

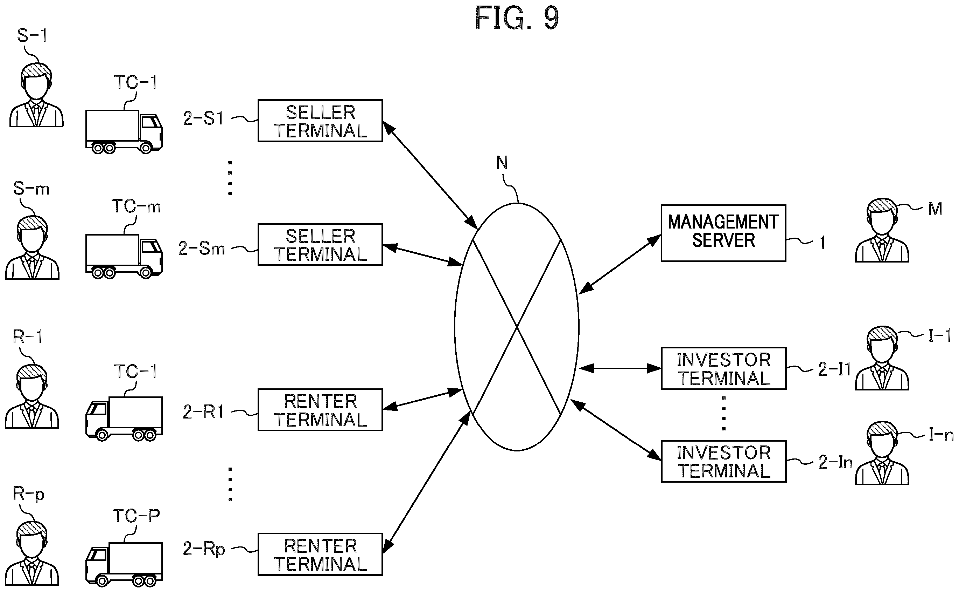

FIG. 9 is a view illustrating an outline configuration of an information processing system applied to the truck fund illustrated in FIG. 8, that is, the information processing system according to the embodiment of the present invention.

The information processing system illustrated in FIG. 9 is configured as the management server 1 that the service provider M operates, each of investor terminals 2-11 to 2-In that investors I-1 to I-n (n is a desired integer value equal to or more than 1) each operate, each of seller terminals 2-S1 to 2-Sm that sellers S-1 to S-m (m is a desired integer value equal to or more than 1) each operate, and each of renter terminals 2-R1 to 2-Rp that renters R-1 to R-p (p is a desired integer value equal to or more than 1) each operate are coupled to each other via the predetermined network N such as the Internet.

Note herein that one reason for why a reference numeral of "2" is included in the reference numerals of all the terminals for the investors I-1 to I-n, the sellers S-1 to S-m, and the renters R-1 to R-p is that the investors I-1 to In, the sellers S-1 to S-m, and the renters R-1 to R-p serve as users of the present service illustrated in FIG. 1, and the terminals correspond to the user terminals illustrated in FIG. 2.

The truck fund has been described above as a specific example for making it possible to regard at least either a first value or a second value as a fund or an investment target or a return for the fund or the investment target. Next, a rental service will now be described herein as another specific example.

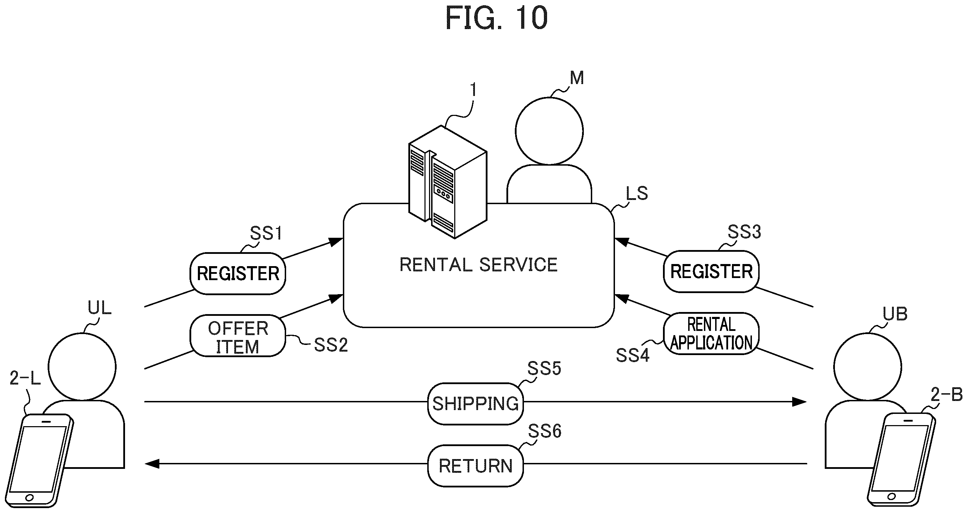

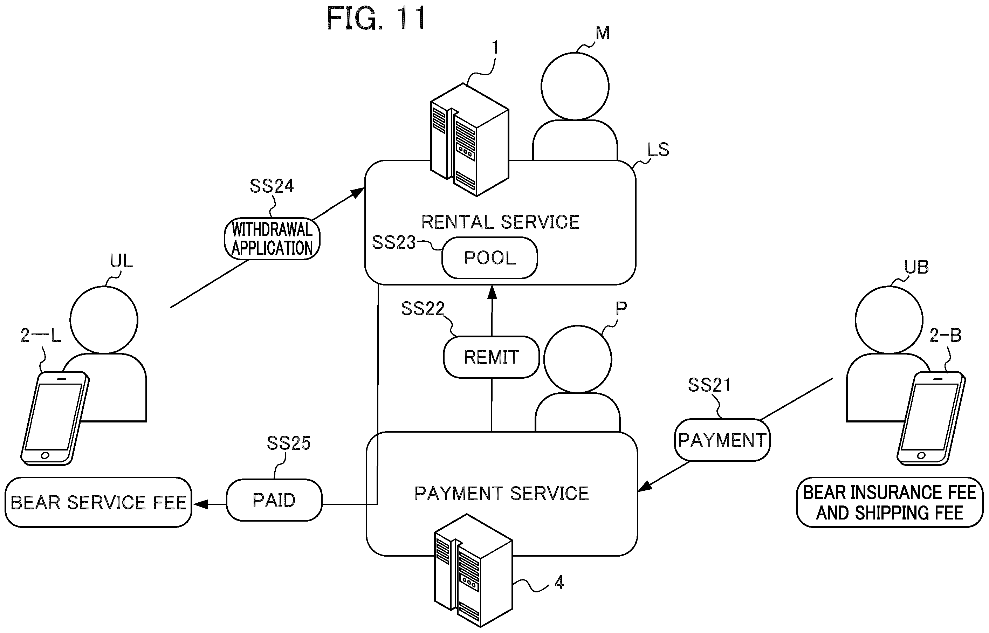

FIG. 10 is an image view illustrating a basic flow of a rental service that becomes feasible through application of the information processing system according to the embodiment of the present invention. Note that FIG. 10, and FIG. 11 described later, both of which describe one of lending users UL and one of renting users UB, respectively, illustrate simplified cases to describe flows of the present service in an easily understandable manner. In reality, there may be a plurality of the lending users UL and a plurality of the renting users UB in the present service. Furthermore, the lending users UL and the renting users UB are each an individual or organization. An "individual or organization" as referred to herein may be an "individual or organization" in the real space (the real world) or an "individual or organization" in a virtual space. One assumed individual in a virtual space is a virtual user represented as an avatar.

At step SS1, to receive provision of the rental service, the lending user UL operates the user terminal 2 (that is referred to as the "lender terminal 2" in the description with reference to FIGs. 10 to 12) to carry out user registration to the rental service. Content of the user registration is recorded and managed in the block chain B.

At step SS2, the lending user UL operates the user terminal 2 (that is referred to as the "lender terminal 2" in the description with reference to FIGs. 10 to 12) to register, in the present service, information relating to an item that the lending user wishes to lend (hereinafter referred to as "offer information"). The registered offer information is recorded and managed in the block chain B. Upon registration of the offer information, the item is treated as an "offered item" that is "offered" in the present service. The lending user UL who has offered the offered item is then treated as an "offeror". Note herein that an "item" is an item or equivalent in a case of the real space (the real world), but is an electronic information material such as an object in a case of a virtual world. Furthermore, content of offer information to be registered in the rental service is not particularly limited. It is possible to register, as offer information, desired information relating to an offered item. Specifically, for example, it is possible that offer information includes text information including a name, a type, characteristics, a size, a weight, a purchase price, a desired rental fee, a rental period, and whether or not it is sellable for an offered item, and image information based on a captured image of the offered item. Note herein that a captured image of an offered item includes a captured image in which the offered item represented as an object in a virtual space is imaged by a camera (at a predetermined point of view) in the virtual space. Note that items treated as offered items subject to the rental service are not particularly limited, as long as the items are intended to be offered for rental. Specifically, for example, as long as they are "items" in the real space (the real world), items such as garments, camping gear such as tents, golf clubs, fishing gear, suitcases, gaming devices, tablets and personal computers, office automation (OA) equipment, wristwatches, parcels of land, spaces, houses, furniture articles, fixtures and fittings, vehicles, motorcycles, books, compact discs (CD) and records, cameras, shoes, accessories, bags, special tools, and nursery items such as baby carriages may all be offered for rental. Furthermore, for example, as long as they are "items" in a virtual space, objects in a virtual space (a metaverse), which correspond to items exemplified in the real space described above, and non-fungible tokens (NFTs) may all be offered for rental.

At step SS3, to receive provision of the rental service, the renting user UB operates the renter terminal 2 to carry out user registration to the rental service. Content of the user registration is recorded and managed in the block chain B. Note herein that the lending user UL having undergone the user registration at step SS1 and the renting user UB having undergone the user registration at step SS3 are not differentiated from each other in any particular way, but are both registered as users who receive provision of the rental service. Therefore, it is possible that the lending user UL receives the rental service for the renting users UB and the renting user UB receives the rental service for the lending users UL. That is, upon the user registration to the rental service, a user is allowed to participate as a user who lends items in both the real space (the real world) and a virtual space, and to participate as a user who rents items in both the real space (the real world) and a virtual space.

At step SS4, the renting user UB makes, when there is an item that the renting user UB himself or herself wishes to rent, among offered items offered in the rental service, an application for renting the offered item (hereinafter referred to as a "rental application"). Furthermore, the renting user UB makes an insurance application as required. Note that, in the present service, the renting user UB who has made a rental application for an offered item is also referred to as a "rental applicant". On the renter terminal 2, one or more offered items are displayed, together with their offer information. When there is an item that the renting user UB himself or herself wishes to rent, among the one or more offered items displayed on the renter terminal 2, the renting user UB operates the renter terminal 2 to make a rental application for the offered item.

When the renting user UB is allowed to rent the offered item as a result of making the rental application, the renting user UB who has made the rental application makes a payment at the desired rental fee included in the offer information. A record of the payment is recorded and managed in the block chain B as the transaction information. Furthermore, content of an insurance applied as required is also recorded and managed in the block chain B.

At step SS5, the lending user UL sends the offered item to the renting user UB who has made the rental application. Sending an item, as referred to herein, means sending the actual item by mail, for example, when it is an offered item in the real space (the real world), and means sending electronic data of the item (an object) (in a form of a use permission for the electronic data, as required), when it is an offered item in a virtual space, for example. The renting user UB having received the offered item compares the offered item that has been sent with the captured image of the offered item, which is included in the offer information. In a case where there are no discrepancies, the renting user UB then starts to utilize the offered item. Specifically, when an offered item in the real space (the real world) has been delivered to the renting user UB, for example, the renting user UB having received the offered item visually compares the captured image of the offered item, which is included in the offer information provided by the lending user UL, with the actual item. Specifically, when an offered item in a virtual space has been delivered to the renting user UB, for example, the renting user UB having received the offered item performs comparison using the renting user terminal 2. Comparison, as referred to herein, may be visual inspection (visual check) by the lending user B on a screen of the renting user terminal 2, or may be processing performed by the renting user terminal 2. In a case where there are no discrepancies between the captured image and the actual item as a result of the comparison by the renting user UB, or in a case where there is a discrepancy, but the discrepancy is regarded as acceptable, the renting user UB operates the renter terminal 2 to send, to the management server 1, information indicating the start of the rental. Specifically, for example, although not illustrated, pressing an "Approve" button or a "Start rental" button on the renter terminal 2 sends the information indicating the start of the rental to the management server 1. The management server 1 then receives the information, accepting that the renting user UB has approved the start of the rental. Such information relating to the start of rental is also recorded and managed in the block chain B as the transaction information. On the other hand, in a case where there is a discrepancy that is regarded as unacceptable as a result of the comparison of the offered item that has been sent with the captured image, the renting user UB (the rental applicant) defers (i.e., does not start) the utilization of the offered item. In this case, for example, the renting user UB (the rental applicant) does not press the "Approve" button or the "Start rental" button displayed on the renter terminal 2, but returns the offered item to the sender. Such information of the return is also recorded and managed in the block chain B as the transaction information. Furthermore, for example, under a system environment where a refund after the completion of the payment processing is permitted, the renting user UB (the rental applicant) is able to negotiate with the offeror via the rental service to receive a refund of part of the rental fee to start the rental or to receive a refund of all the rental fee to cancel the rental. Such a negotiation as described above may be directly performed between users by utilizing a communication tool provided in the present service or may be indirectly performed via the rental service provider M. Such a result of the negotiation is also recorded and managed in the block chain B as the transaction information.

At step SS6, the renting user UB returns the offered item to the offeror of the offered item by an expiration date of the rental period. When the offered item is returned to the lending user UL, the lending user UL compares the offered item that has been returned with the captured image of the offered item, which is included in the offer information. In a case where there are no discrepancies, the rental service is completed. Such information of the completion is also recorded and managed in the block chain B as the transaction information. Note herein that, in a case where there is a discrepancy that is regarded as unacceptable as a result of the comparison of the offered item that has been returned with the captured image, the lending user UL who is the offeror is able to negotiate with the renting user UB via the rental service to take measures as described below, for example. That is, the lending user UL can either charge the rental applicant a fee in addition to the rental fee which has already been paid or have the rental applicant buy the offered item. Such a negotiation as described above may be directly performed between users by utilizing a communication tool provided in the rental service or may be indirectly performed via the rental service provider M. Such a result of the negotiation is also recorded and managed in the block chain B as the transaction information.

FIG. 11 is an image view illustrating a flow of a fee paid from a renting user in the rental service.

At step SS21, the renting user UB makes a payment of a rental fee. Specifically, the renting user UB operates the renter terminal 2 to request, to a payment service provider P, for performing payment processing of the rental fee. Furthermore, when the renting user UB bears an insurance fee and a shipping fee, the renting user UB requests the payment service provider P to process payment of the rental fee, the insurance fee, and the shipping fee (hereinafter referred to as "rental and other fees"). A record of the payment of the rental and other fees is recorded and managed in the block chain B as transaction information.

The payment service provider P who has performed the payment processing of the rental and other fees based on the request from the renting user UB remits, at step SS22, to the present service provider M, an amount of money acquired by subtracting a predetermined commission fee from the payment amount (hereinafter referred to as a "sales amount"). A record of the remittance is recorded and managed in the block chain B as the transaction information. At step SS23, the rental service provider M pools the sales amount that has been remitted. A record of the pooled sales amount is recorded and managed in the block chain B as the transaction information.

At step SS24, the lending user UL who is the offeror withdraws an amount of cash that is equal to or less than an amount of money acquired by subtracting a fee of the rental service from the sales amount that the rental service provider M has pooled. Specifically, the lending user UL who is the offeror operates the lender terminal 2 to make an application of wishing to withdraw an amount of cash that is equal to or less than the amount of money acquired by subtracting the fee of the rental service from the sales amount (hereinafter referred to as a "withdrawal application").

At step SS25, the rental service provider M performs paying-in processing of the amount of cash based on content of the withdrawal application from the lending user UL. Specifically, the rental service provider M performs the paying-in processing via the payment service based on the content of the withdrawal application from the lending user UL. Note that such an amount of money may be directly paid from an account of the rental service provider M without performing the paying-in processing via the payment service. In any case, a record of the paying-in is recorded and managed in the block chain B as the transaction information.

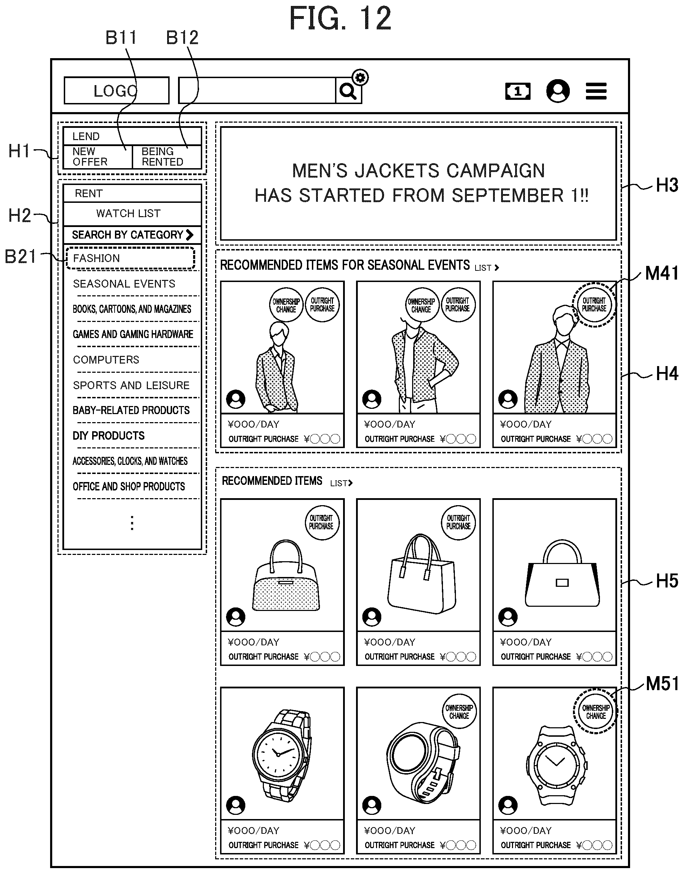

FIG. 12 is a view illustrating an example case of making a rental application via a graphical user interface (GUI) displayed on each of the lender terminals and the renter terminals.

The screen illustrated in FIG. 2, among screens to be displayed on each of the lender terminals 2 and the renter terminals 2, is formed to include display regions H1 to H5.

In the display region H1, buttons to be pressed when a user of the rental service offers an item as the lending user UL are displayed. Specifically, as illustrated in FIG. 12, a button B11 displayed as "New offer" and a button B12 displayed as "Being rented" are displayed. Note herein that, when the button B11 displayed as "New offer" is pressed, the screen transitions to a non-illustrated screen to newly offer an item. Furthermore, when the button B12 displayed as "Being rented" is pressed, a list of offered items that the user of the rental service is lending as the lending user UL is displayed. Specifically, for example, when the button B12 displayed as "Being rented" is pressed, the screen may transition to a non-illustrated My Page screen to display the list of the lent offered items.

In the display region H2, buttons to be pressed when a user of the rental service rents an offered item as the renting user UB are displayed. Specifically, as illustrated in FIG. 12, a button displayed as "Watch list", a button displayed as "Search by category", and, as various types of buttons indicating categories, a button B21 displayed as "Fashion", a button displayed as "Seasonal events", and a button displayed as "Books, cartoons, and magazines", for example, are displayed.

In the display region H3, an announcement or an advertisement to the user is displayed. In the example illustrated in FIG. 12, the announcement of "Men's jackets campaign has started from September 1!!" is displayed. It is also possible to press, as a button, an announcement or an advertisement displayed in the display region H3. In this case, when the announcement illustrated in FIG. 12 is pressed, a special screen (not illustrated) indicating specific content of the announcement may be displayed.

In the display region H4, three captured images of men's jackets are selected, from among the offered items offered by lending users UL1 to ULn, and displayed as "Recommended items for seasonal events", together with their offer information. Note that the term "commodity" used herein means an offered item offered by each of the lending users UL.

In the display region H5, three captured images of handbags and three captured images of wristwatches are selected, from among the offered items offered by the lending users UL1 to ULn, and displayed as "Recommended items", together with their offer information. The renting users UB are able to see content displayed in the display regions H2 to H3 to easily find a desired offered item.

Some of the offered items respectively displayed in the display regions H4 and H5 feature an "Outright purchase" mark M41 and/or an "ownership change" mark M51.

The "Outright purchase" mark M41 featured on the offered items means that respective offer information includes an intention to sell. That is, it means that the lending user UL thinks that the offered item "may be taken over" after a predetermined rental period has expired. Specifically, for example, in a case where an offered item worth a value of 10000 JPY is lent at a price of 100 JPY per day, and when a rental period reaches 100 days, a total sales rental fee reaches 10000 JPY. In this case, the lending user UL may take the view that "the base price has been recovered", and that the offered item may be taken over as is by the renting user UB. Therefore, in the offer information of the offered items respectively displayed in the display regions H4 and H5 in FIG. 12, outright purchase amounts are displayed in addition to rental fees per day.

Furthermore, the offered items featuring the "ownership change" mark M51 are offered items for which it is possible to change a right of receiving a rental fee of each of the offered items, together with an ownership right of each of the offered items, without changing a status that each of the offered items is being rented. That is, it means that, for each of the offered items, it is possible to change the ownership right to the rental service provider M or each of the renting users UB, while the right of receiving the rental fee is reserved. Note herein that, when there is a fact that ownership change has been requested, the fact is also recorded and managed in the block chain B as the transaction information.

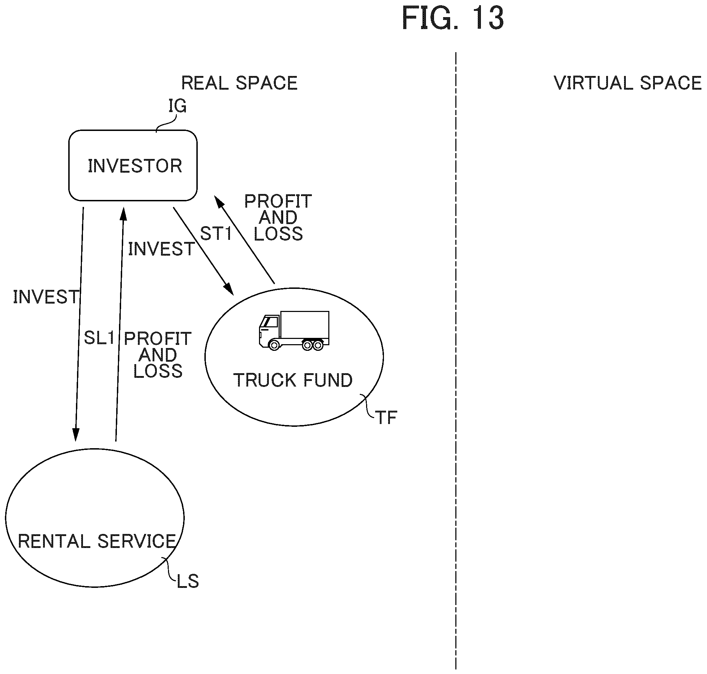

Next, specific examples of transactions relating to investments that become feasible in the present service illustrated in FIG. 1, which is provided by the management server 1 having the functional configuration illustrated in FIG. 4, will now be described herein with reference to FIGs. 13 to 26. Note that, although, in the examples described below, the truck fund TF and a rental service LS are mainly described as investment targets, the investment targets are not particularly limited to them, and the below description similarly applies to other targets including real estate and stocks (including those available in virtual spaces).

FIG. 13 is a view illustrating a specific example of a first stage of a first transaction relating to investments that become feasible in the present service illustrated in FIG. 1, which is provided by the management server having the functional configuration illustrated in FIG. 4. In the example illustrated in FIG. 13, it is assumed that an investor IG taking a role as a user in the real space (the real world) perform investments to the truck fund TF and the rental service LS described above. Note that, for purposes of description, an investment of own capital to the truck fund TF will be hereinafter simply referred to as an "investment of a first value". Furthermore, earning a dividend from the truck fund TF will be hereinafter simply referred to as a "profit and loss of a second value". Furthermore, two types of investments to the rental service LS are present. The first type is an investment for earning a profit through a lease fee and outright purchase as the investor IG takes a role as a lending user UL to offer an item. The second type is an investment for earning some kind of return from the rental service provider M as the investor IG performs an investment to a platform called the rental service LS. However, these types described above are not particularly mentioned in those described below for purposes of description, and an act of providing own capital or an item that is a target to be offered in the rental service will be simply referred to as an "investment of a first value", and an act of earning a sales amount based on a return for the investment from the rental service provider M or rental and other fees from a renting user UB will be simply referred to as a "profit and loss of a second value".

At step SL1 illustrated in FIG. 13, the investor IG in the real space (the real world) performs an investment of a first value to the rental service LS in the real space (the real world), and earns a profit and loss of a second value for the investment from the rental service LS. Information transmitted and received in the investment of the first value and the profit and loss of the second value in this case is generated as transaction information, and recorded, and managed in the block chain B.

At step ST1 illustrated in FIG. 13, the investor IG in the real space (the real world) performs an investment of a first value to the truck fund TF in the real space (the real world), and earns a profit and loss of a second value for the investment from the truck fund TF. Information transmitted and received in the investment of the first value and the profit and loss of the second value in this case is generated as transaction information, and recorded, and managed in the block chain B.

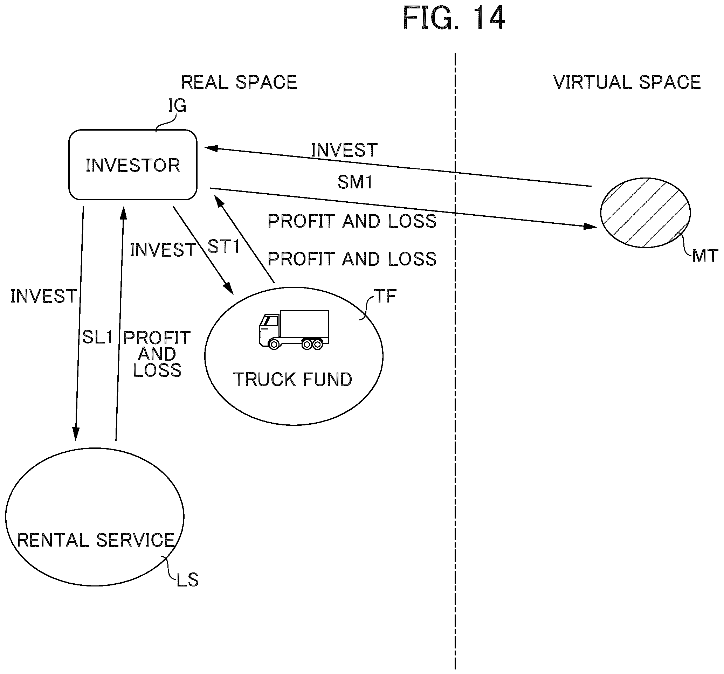

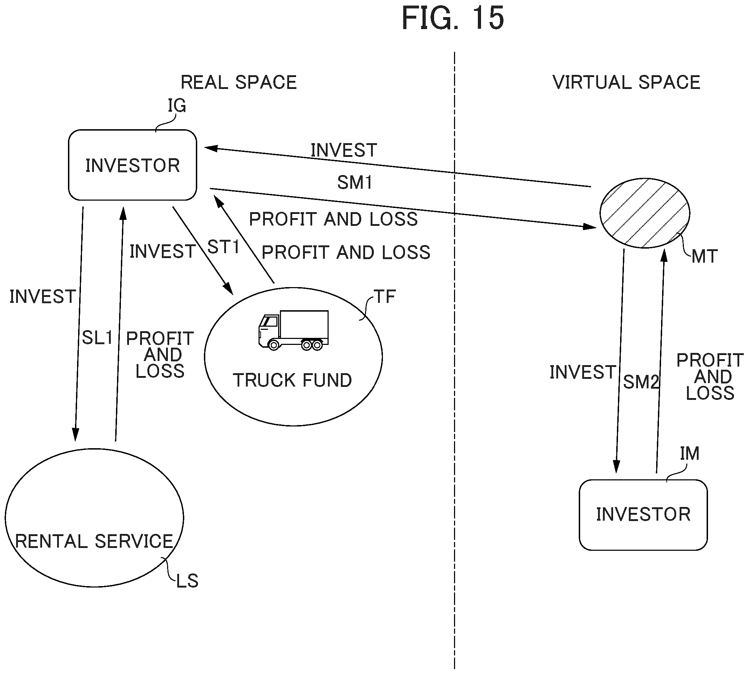

FIG. 14 is a view illustrating a specific example of a second stage of the first transaction relating to the investments that become feasible in the present service illustrated in FIG. 1, which is provided by the management server having the functional configuration illustrated in FIG. 4. FIG. 15 is a view illustrating a specific example a third stage of the first transaction relating to the investments that become feasible in the present service illustrated in FIG. 1, which is provided by the management server having the functional configuration illustrated in FIG. 4. In the example illustrated in FIG. 15, it is assumed that an investor IM taking a role as a user in a virtual space (a metaverse) perform an investment to a virtual investment target MT to which the investor IG taking a role as the user in the real space (the real world) has performed the investment in the example illustrated in FIG. 14. Note herein that the investor IM in the virtual space (the metaverse) may not necessarily correspond to a user in the real space (the real world) in a one by one manner, as described above with reference to FIG. 7, and may be a collective investment scheme (a fund). At step SM2 illustrated in FIG. 15, the investor IM in the virtual space (the metaverse) performs an investment of a first value to the virtual investment target MT in the virtual space (the metaverse), and earns a profit and loss of a second value for the investment from the virtual investment target MT. In the transaction at step SM2, the record of the transaction at step SM1, which is recorded and managed in the block chain B, is also used as required. Note herein that a second value is not particularly limited, and it is possible to of course employ a legal currency or a virtual asset, and to employ a desired value that is available in a virtual space (a metaverse) (for example, an item used in a game played in a metaverse). Information transmitted and received in the investment of the first value and the profit and loss of the second value at step SM2 is generated as transaction information, and recorded, and managed in the block chain B.

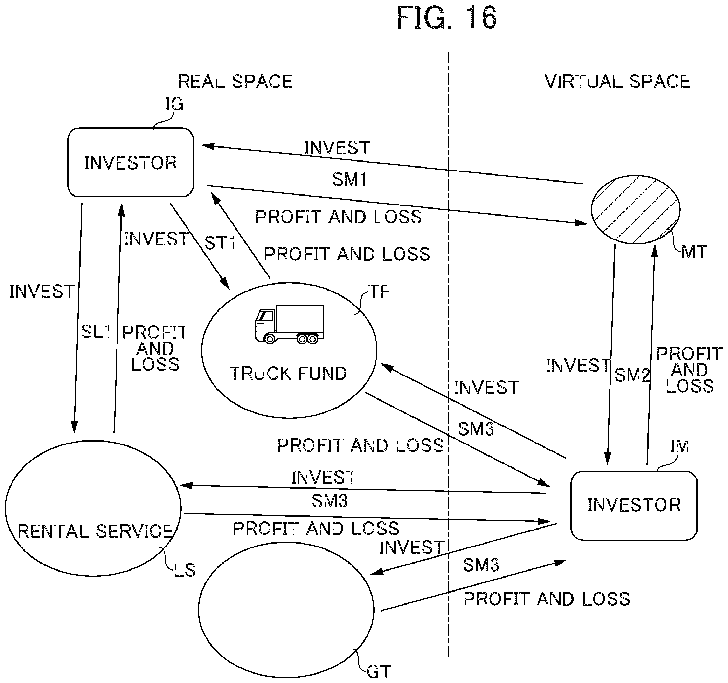

FIG. 16 is a view illustrating a specific example of a fourth stage of the first transaction relating to the investments that become feasible in the present service illustrated in FIG. 1, which is provided by the management server having the functional configuration illustrated in FIG. 4. In the example illustrated in FIG. 16, it is assumed that the investor IM taking a role as the user in the virtual space (the metaverse) who has performed the investment to the virtual investment target MT in the example illustrated in FIG. 15 perform investments to investment targets in the real space (the real world). At step SM3 illustrated in FIG. 16, the investor IM in the virtual space (the metaverse) performs investments of first values to investment targets (the rental service LS, the truck fund TF, and another investment target GT) in the real space (the real world), and earns profits and losses of second values for the investments from the investments. Information transmitted and received in the investments of the first values and the profits and losses of the second values at step SM3 is generated as transaction information , and recorded, and managed in the block chain B. In the transactions at step SM3, the record of the transactions by the investor IM, which is recorded and managed in the block chain B, is also used as required.

Note herein that specific examples of handling of assets in virtual investment targets MT in virtual spaces (metaverses) will now be described herein with reference to FIGs. 17. Assumed assets in the virtual investment targets MT in the virtual space (the metaverse) include, for example, trucks T (objects) for the truck fund TF in the virtual space and items (objects) offered in the rental service LS in the virtual space.

FIGs. 17 illustrate the specific examples of handling of the assets in the virtual investment targets in the virtual spaces. FIG. 17A illustrates a specific example of handling of assets that do not deteriorate in a virtual space, but change in value depending only on markets, such as parcels of land in the real space (the real world) (assets that are set so in metaverses). FIG. 17B illustrates a specific example of handling of assets that undergo depreciation in a virtual space for example, assets that become obsolete (assets that are set so in metaverses). For depreciation in the specific example illustrated in FIG. 17B, an idea of depreciation in the real space (the real world) is applied. FIG. 17C illustrates a specific example of handling of assets each for which a duration has been set originally in a virtual space, and may not be present technically after the duration has passed (assets that are set so in metaverses). FIG. 17D illustrates a specific example of handling of assets that do not undergo depreciation and each for which no lease fee is set in a virtual space (assets that are set so in metaverses).

FIG. 18 is a view illustrating a specific example of a first stage of a second transaction relating to investments that become feasible in the present service illustrated in FIG. 1, which is provided by the management server having the functional configuration illustrated in FIG. 4. In the example illustrated in FIG. 18, it is assumed that an investor IG1 taking a role as a user in the real space (the real world) perform an investment to an investment target GT in the real space (the real world) such as the truck fund TF or the rental service LS described above, for example. Note that, in the description of the second transaction, the term "investment" means a transaction including an "investment of a first value" and a "profit and loss of a second value" for purpose of convenience.

At step SG1 illustrated in FIG. 18, the investor IG1 in the real space (the real world) performs an investment to the investment target GT in the real space (the real world). Information transmitted and received in the investment (the investment of the first value and the profit and loss of the second value) in this case is generated as transaction information, and recorded, and managed in the block chain B.

At step SG2 illustrated in FIG. 18, the investor IG1 in the real space (the real world) requests an ownership change for the investment target GT in the real space (the real world) to an investor IG2 in the real space (the real world). An ownership change is one type of a transaction. Therefore, when an ownership change is to be requested, the record of the investment to the investment target GT in the space (the real world) at step SG1 is appropriately acquired from the block chain B and utilized. Furthermore, a record of the ownership change is recorded and managed in the block chain B.

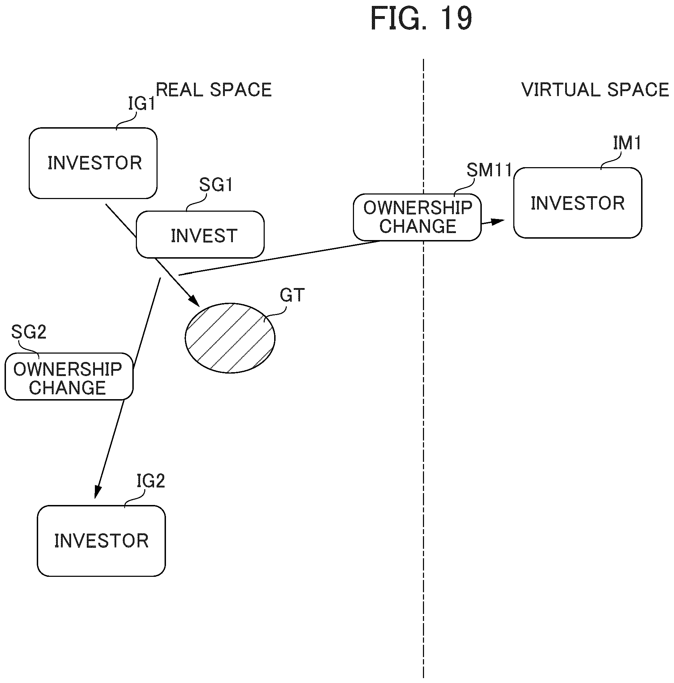

FIG. 19 is a view illustrating a specific example of a second stage of the second transaction relating to the investments that become feasible in the present service illustrated in FIG. 1, which is provided by the management server having the functional configuration illustrated in FIG. 4. Also in the example illustrated in FIG. 19, similar to the example illustrated in FIG. 18, it is assumed that an investor IG1 taking a role as the user in the real space (the real world) perform an investment to an investment target GT in the real space (the real world) such as the truck fund TF or the rental service LS described above, for example.

At step SM11 illustrated in FIG. 19, the investor IG1 in the real space (the real world) requests an ownership change for the investment target GT in the real space (the real world) to an investor IM1 in a virtual space (a metaverse). An ownership change is one type of a transaction. Therefore, when an ownership change is to be requested, the record of the investment to the investment target GT in the space (the real world) at step SG1 is appropriately acquired from the block chain B and utilized. Furthermore, a record of the ownership change is recorded and managed in the block chain B.

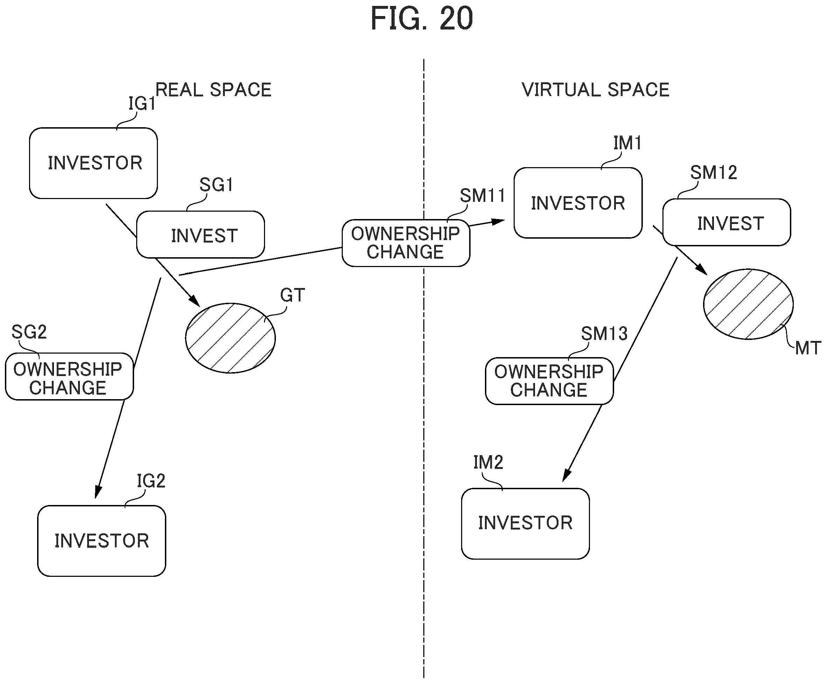

FIG. 20 is a view illustrating a specific example a third stage of the second transaction relating to the investments that become feasible in the present service illustrated in FIG. 1, which is provided by the management server having the functional configuration illustrated in FIG. 4. In the example illustrated in FIG. 20, it is assumed that the investor IM1 taking a role as the user in the virtual space (the metaverse) performs an investment to a virtual investment target MT in the virtual space.

At step SM12 illustrated in FIG. 20, the investor IM1 in the virtual space (the metaverse) performs an investment to the virtual investment target MT in the virtual space (the metaverse). Information transmitted and received in the investment (the investment of the first value and the profit and loss of the second value) in this case is generated as transaction information, and recorded, and managed in the block chain B.

At step SM13 illustrated in FIG. 20, the investor IM1 in the virtual space (the metaverse) requests an ownership change for the virtual investment target MT in the virtual space (the metaverse) to an investor IM2 in the virtual space (the metaverse). An ownership change is one type of a transaction. Therefore, when an ownership change is to be requested, the record of the investment to the virtual investment target MT in the virtual space (the metaverse) at step SM13 is appropriately acquired from the block chain B and utilized. Furthermore, a record of the ownership change is recorded and managed in the block chain B.

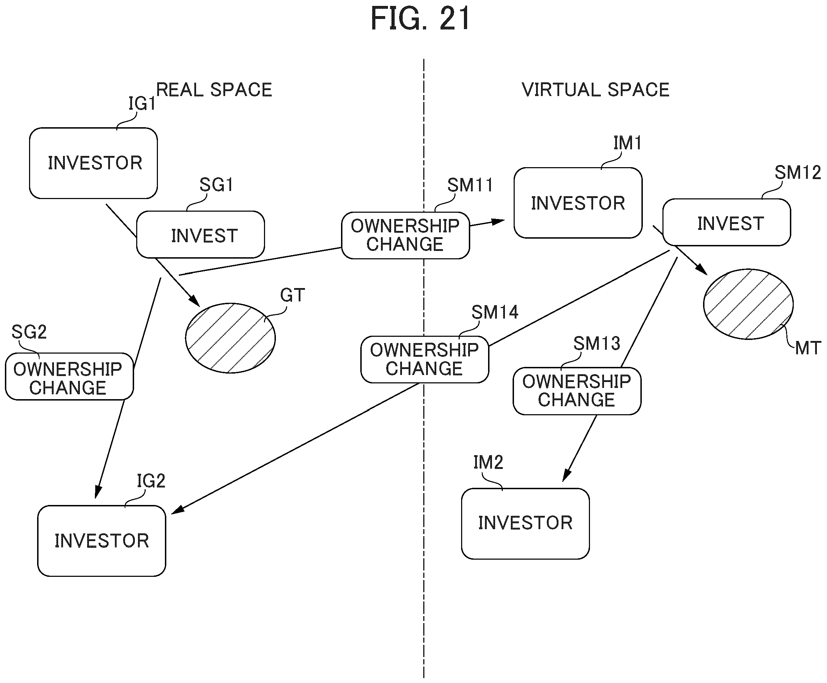

FIG. 21 is a view illustrating a specific example of a fourth stage of the second transaction relating to the investments that become feasible in the present service illustrated in FIG. 1, which is provided by the management server having the functional configuration illustrated in FIG. 4. In the example illustrated in FIG. 21, it is assumed that the investor IM1 taking a role as the user in the virtual space (the metaverse) requests an ownership change for the virtual investment target MT in the virtual space to the investor IG2 taking a role as the user in the real space (the real world).

At step SM14 illustrated in FIG. 21, the investor IM1 in the virtual space (the metaverse) requests an ownership change for the virtual investment target MT in the virtual space (the metaverse) to the investor IG2 in the real space (the real world). An ownership change is one type of a transaction. Therefore, when an ownership change is to be requested, the record of the investment to the virtual investment target MT in the virtual space (the metaverse) at step SM13 is appropriately acquired from the block chain B and utilized. Furthermore, a record of the ownership change is recorded and managed in the block chain B.

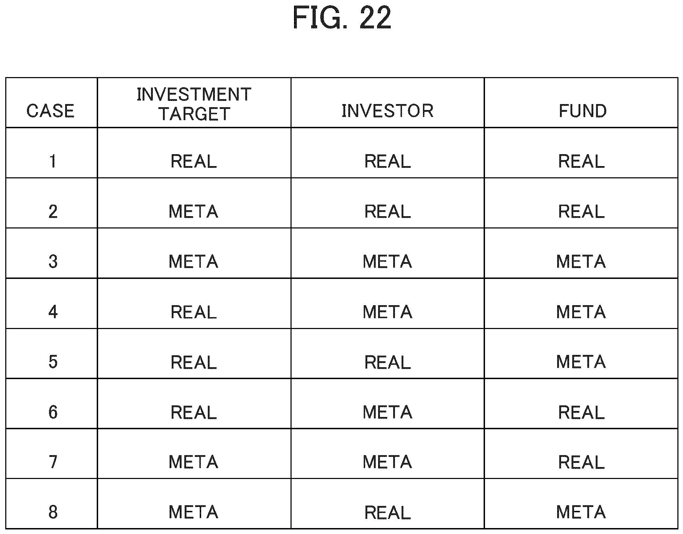

Note that a transaction relating to an investment of a fund as described above is a mere example, and various types and forms of cases as illustrated in FIG. 22 are present. FIG. 22 illustrates cases of investments that become feasible in the present service illustrated in FIG. 1, which is provided by the management server having the functional configuration illustrated in FIG. 4. In a table illustrated in and description with reference to FIG. 22, "Real" means "the real space (the real world)", and "Meta" means "a virtual space (a metaverse)". A first case describes that (Investment target, Investor, Fund) = (Real, Real, Real). A second case describes that (Investment target, Investor, Fund) = (Meta, Real, Real). A third case describes that (Investment Target, investor, Fund) = (Meta, Meta, Meta). A fourth case describes that (Investment Target, investor, Fund) = (Real, Meta, Meta). A fifth case describes that (Investment Target, investor, Fund) = (Real, Real, Meta). A sixth case describes that (Investment Target, investor, Fund) = (Real, Meta, Real). A seventh case describes that (Investment Target, investor, Fund) = (Meta, Meta, Real). An eighth case describes that (Investment Target, investor, Fund) = (Meta, Real, Meta).

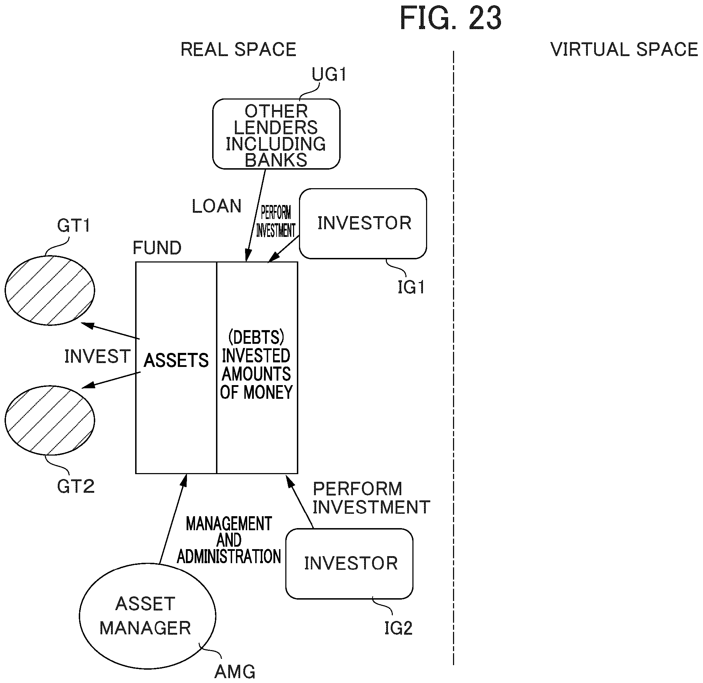

FIG. 23 illustrates an example of a fund in the real space (the real world). The fund includes assets and invested amounts of money (debts). In the example illustrated in FIG. 23, an asset manager AMG in the real space (the real world) administrates and manages the fund. In the example illustrated in FIG. 23, investments are performed to investment targets GT1, GT2 in the real space (the real world) from the assets in the fund. In the example illustrated in FIG. 23, investors IG1, IG2 in the real space (the real world) perform investments to the fund, and another user UG1 in the real space (the real world), such as a bank or another lender, performs a loan to the fund.

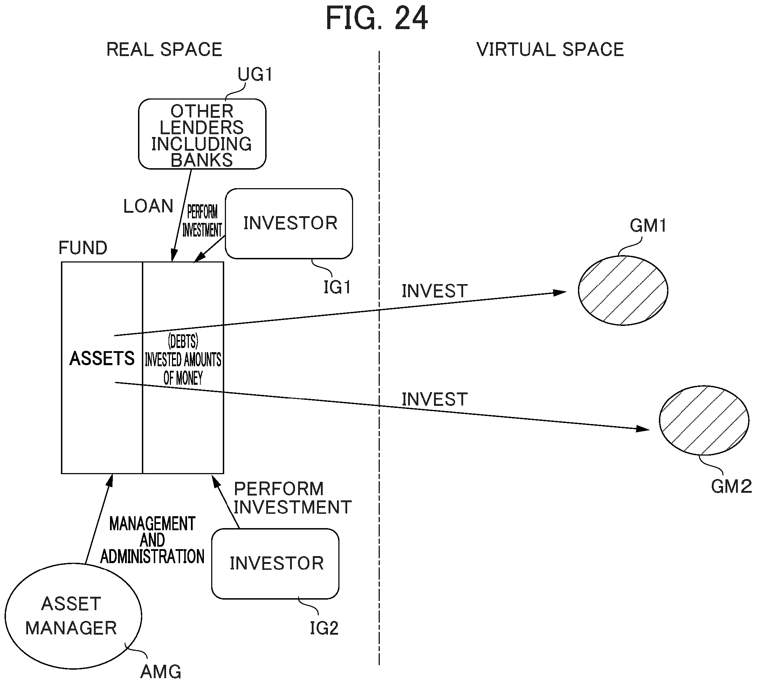

FIG. 24 is a view illustrating a specific example of a second pattern relating to the investments of the fund, which become feasible in the present service illustrated in FIG. 1, which is provided by the management server having the functional configuration illustrated in FIG. 4. FIG. 24 illustrates an example of the fund in the real space (the real world). The fund includes the assets and the invested amounts of money (debts). In the example illustrated in FIG. 24, the asset manager AMG in the real space (the real world) administrates and manages the fund. In the example illustrated in FIG. 24, investments are performed to investment targets GM1, GM2 in a virtual space (a metaverse) from the assets in the fund. In the example illustrated in FIG. 24, the investors IG1, IG2 in the real space (the real world) perform the investments to the fund, and the other user UG1 in the real space (the real world), such as a bank or another lender, performs the loan to the fund.

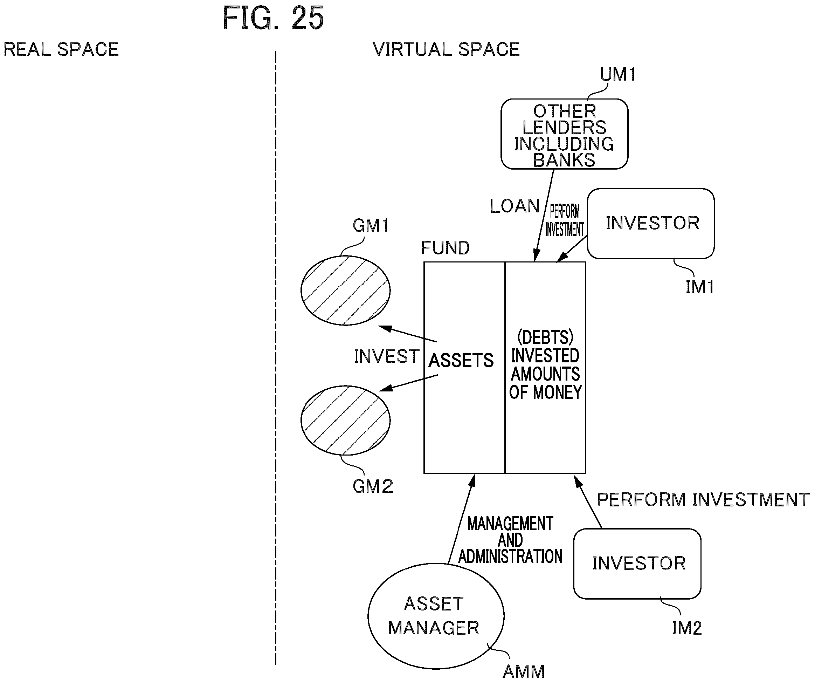

FIG. 25 is a view illustrating a specific example a third pattern relating to the investments of a fund, which become feasible in the present service illustrated in FIG. 1, which is provided by the management server having the functional configuration illustrated in FIG. 4. FIG. 25 illustrates an example of the fund in a virtual space (a metaverse). The fund includes assets and invested amounts of money (debts). In the example illustrated in FIG. 25, an asset manager AMM in the virtual space (the metaverse) administrates and manages the fund. In the example illustrated in FIG. 25, investments are performed to investment targets GM1, GM2 in the virtual space (the metaverse) from the assets in the fund. In the example illustrated in FIG. 25, investors IM1, IM2 in the virtual space (the metaverse) perform investments to the fund, and another user UM1 in the virtual space (the metaverse), such as a bank or another lender, performs a loan to the fund.

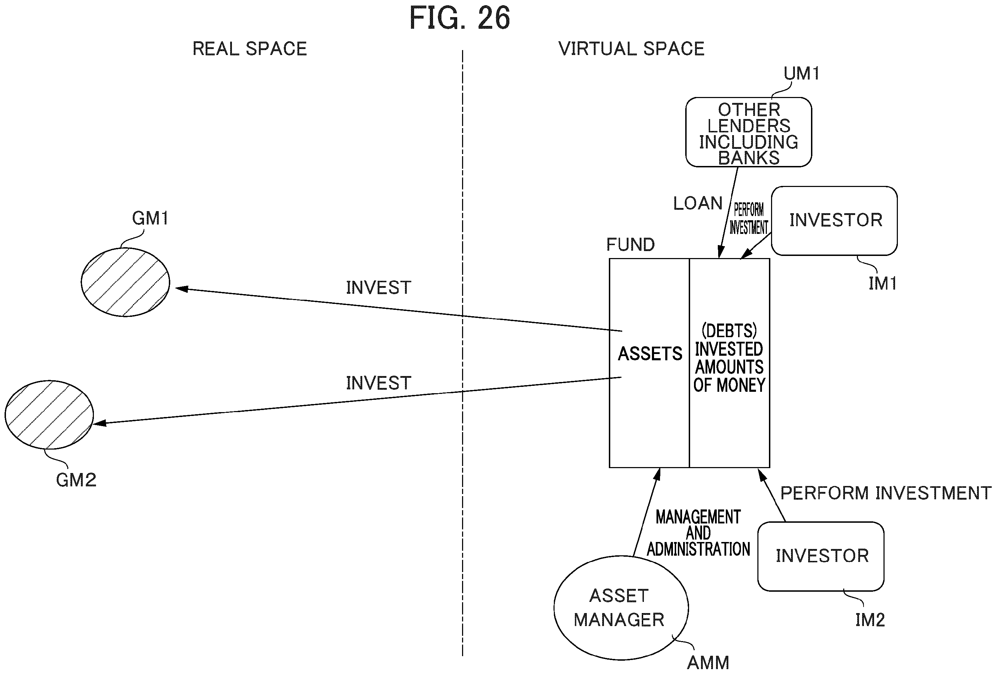

FIG. 26 is a view illustrating a specific example of a fourth pattern relating to the investments of the fund, which become feasible in the present service illustrated in FIG. 1, which is provided by the management server having the functional configuration illustrated in FIG. 4. FIG. 26 illustrates an example of the fund in the virtual space (the metaverse). The fund includes the assets and the invested amounts of money (debts). In the example illustrated in FIG. 26, the asset manager AMM in the virtual space (the metaverse) administrates and manages the fund. In the example illustrated in FIG. 26, investments are performed to investment targets GM1, GM2 in the real space (the real world) from the assets in the fund. In the example illustrated in FIG. 25, the investors IM1, IM2 in the virtual space (the metaverse) perform the investments to the fund, and the other user UM1 in the virtual space (the metaverse), such as a bank or another lender, performs the loan to the fund.

Although the embodiment of the present invention has been described, the present invention is not limited to the embodiment described above. The present invention still includes amendments and modifications, for example, that fall within the scope of the present invention, as long as it is possible to achieve the object of the present invention.

For example, although, in the embodiment described above, forms of transactions that become possible in the present service have been described with reference to the examples illustrated in FIGs. 5 to 7 and FIGs. 13 to 26, a form of a transaction is not particularly limited to these examples. For example, it is possible to employ a transaction for exchanging a first value that is present in a first virtual space and a second value that is present in another space, that is, a second virtual space. That is, it is sufficient that such a transaction be a transaction for exchanging, between a first user who is present in the real space or a virtual space, the first user having a first value in the real space or the virtual space, and a second user who is present in the real space or a virtual space, the second user having a second value in the real space or the virtual space, the first value and the second value, that is, the transaction when at least one of the first value, the first user, the second value, or the second user is present in the virtual space, and it is possible to employ various types and forms of transactions.

For example, the block chain B has been utilized for managing the validity of transaction information in the embodiment described above. However, a distributed ledger may be utilized, instead of the block chain.

Furthermore, it is sufficient that targets of transactions be those that are valuable for a first user and a second user performing the transactions, regardless of whether or not a value is present for others. For example, the targets may include a skill or a right of a real user UG or a virtual user UV.

Furthermore, the hardware configuration illustrated in FIG. 3 is a mere example used to achieve the object of the present invention. The present invention is not particularly limited to the hardware configuration illustrated in FIG. 3.

Furthermore, the functional block diagram illustrated in FIG. 4 is a mere example, and the present invention is not particularly limited to the example. That is, it is enough that an information processing system has functions that make it possible to execute the series of processing described above. Functional blocks used to achieve the functions are not particularly limited to the functional blocks illustrated in the example in FIG. 4.

Furthermore, locations at which the functional blocks are present are not limited to the locations in FIG. 4. Desired locations may be selected. Furthermore, a single piece of hardware may configure one functional block. A single piece of software may configure one functional block. A combination of pieces of hardware and software may configure one functional block.

To execute, with software, processing of each functional block, a program configuring the software is installed into a computer from a network or a recording medium, for example. The computer may be such a computer incorporated in special hardware. Furthermore, the computer may be such a computer installed with various programs used to execute various functions, such as, in addition to servers, general-purpose smart phones and personal computers.

A recording medium storing such programs as described above may not only be a removable medium distributed separately from a device main body to provide the programs to each user, but also be a recording medium provided to each user in a state where the recording medium is assembled beforehand in the device main body, for example.

Note that, in the present specification, steps describing programs recorded in a recording medium include not only processes sequentially executed in a chronological order, but also processes that may not necessarily be executed in a chronological order, but may be executed in parallel or separately.

Furthermore, in the present specification, the term system means a generic apparatus including a plurality of devices and a plurality of means, for example.

To summarize those described above, it is enough that the information processing device to which the present invention is applied takes a configuration as described below. The information processing device may still take one of various embodiments. That is, an information processing device (for example, the management server 1) to which the present invention is applied includes:
a management unit (for example, the transaction information management unit 58 illustrated in FIG. 4) that, when a first transaction for exchanging, between a first user (for example,
the first user RU1 illustrated in FIGs. 5 and 6) who is present in a real space or a virtual space, the first user having a first value (for example, the virtual currency of 100 bots illustrated in FIG. 5 or the mountain picture illustrated in FIG. 6) in the real space or the virtual space, and a second user (for example, the second user RU2 illustrated in FIGs. 5 and 6) who is present in the real space or a virtual space, the second user having a second value (for example, the repayment fee and the rate of return in the virtual currency illustrated in FIG. 5 or the rental fee illustrated in FIG. 6) in the real space or the virtual space, the first value and
the second value has been conducted, records and manages, in a block chain (for example, the block chain B illustrated in FIG. 4) or a distributed ledger, as transaction information (for example, the transaction information B1 illustrated in FIG. 5 or the transaction information B2 illustrated in FIG. 6), information relating to the first value, information relating to the first user, information relating to the second value, and information relating to the second user; and a transaction control unit (for example, the transaction control unit 57 illustrated in FIG. 4) that, when a second transaction relating to at least one of the first value, the first user, the second value, or the second user is to be conducted, controls the second transaction by using the transaction information recorded and managed in the block chain or the distributed ledger by the management unit.

Since, as described above, it is possible, during transactions occurring between the real space and a virtual space, to record and manage, in the block chain B or the distributed ledger, transaction information of a first transaction, and to determine whether or not a second transaction is possible by using the transaction information in the block chain B or the distributed ledger, it is possible to safely conduct transactions of values while maintaining trust between transactors in the second transaction.

Note herein that it is possible that the first transaction is a transaction when at least one of the first value, the first user, the second value, or the second user is present in a virtual space.

It is possible that the management unit further includes, in the transaction information, and records and manages, in the block chain or the distributed ledger, a record of distribution of at least either the first value or the second value.

It is possible that the management unit further includes, in the transaction information, and records and manages, in the block chain or the distributed ledger, a record of an owner of at least either the first value or the second value.

### EXPLANATION OF REFERENCE NUMERALS

1: Management server, 2, 2-1 to 2-n, 2A, 2B: User terminal, 3, 3-1 to 3-m: Virtual space server, 11: CPU, 12: ROM, 13: RAM, 14: Bus, 15: Input-and-output interface, 16: Input unit, 17: Output unit, 18: Storage unit, 19: Communication unit, 20: Drive, 30: Removable medium, 51: Real space information acquisition unit, 52: Real user information acquisition unit, 53: Real value information acquisition unit, 54: Virtual space information acquisition unit, 55: Avatar information acquisition unit, 56: Virtual value information acquisition unit, 57: Transaction control unit, 58: Transaction information management unit, B: Block chain

## Claims

1. An information processing device comprising:
a management unit that, when a first transaction for exchanging, between a first user who is present in a real space or a virtual space, the first user having a first value in the real space or the virtual space, and a second user who is present in the real space or a virtual space, the second user having a second value in the real space or the virtual space, the first value and the second value has been conducted, records and manages, in a block chain or a distributed ledger, as transaction information, information relating to the first value, information relating to the first user, information relating to the second value, and information relating to the second user; and
a transaction control unit that, when a second transaction relating to at least one of the first value, the first user, the second value, or the second user is to be conducted, controls the second transaction by using the transaction information recorded and managed in the block chain or the distributed ledger by the management unit.

2. The information processing device according to claim 1, wherein the first transaction is a transaction when at least one of the first value, the first user, the second value, or the second user is present in a virtual space.

3. The information processing device according to claim 1, wherein the management unit further includes, in the transaction information, and records and manages, in the block chain or the distributed ledger, a record of distribution of at least either the first value or the second value.

4. The information processing device according to claim 1, wherein the management unit further includes, in the transaction information, and records and manages, in the block chain or the distributed ledger, a record of an owner of at least either the first value or the second value.

5. An information processing method executed by an information processing device, the information processing method comprising:
a management step of, when a first transaction for exchanging, between a first user who is present in a real space or a virtual space, the first user having a first value in the real space or the virtual space, and a second user who is present in the real space or a virtual space, the second user having a second value in the real space or the virtual space, the first value and the second value has been conducted, recording and managing, in a block chain or a distributed ledger, as transaction information, information relating to the first value, information relating to the first user, information relating to the second value, and information relating to the second user; and
a transaction control step of, when a second transaction relating to at least one of the first value, the first user, the second value, or the second user is to be conducted, controlling the second transaction by using the transaction information recorded and managed in the block chain or the distributed ledger through processing of the management step.

6. A program for causing a computer to execute control processing comprising:
a management step of, when a first transaction for exchanging, between a first user who is present in a real space or a virtual space, the first user having a first value in the real space or the virtual space, and a second user who is present in the real space or a virtual space, the second user having a second value in the real space or the virtual space, the first value and the second value has been conducted, recording and managing, in a block chain or a distributed ledger, as transaction information, information relating to the first value, information relating to the first user, information relating to the second value, and information relating to the second user; and
a transaction control step of, when a second transaction relating to at least one of the first value, the first user, the second value, or the second user is to be conducted, controlling the second transaction by using the transaction information recorded and managed in the block chain or the distributed ledger through processing of the management step.
